# EUROPÄISCHE PATENTSCHRIFT

(11) **EP 3 825 665 B1**
(45) Veröffentlichungstag und Bekanntmachung des Hinweises auf die Patenterteilung: **20.03.2024**
(21) Anmeldenummer: 20208875.3
(22) Anmeldetag: 20.11.2020
(51) Int. Cl.: G01J 1/42, G01J 1/08, G01N 15/10

(54) **VORICHTUNG ZUR ERZEUUNG VON LICHTPULSEN ZUR CHARAKTERISIERUNG, STANDARDISIERUNG ODER KALIBRIERUNG VON PHOTODETEKTOREN IN DURCHFLUSSZYTOMETERN**
DEVICE FOR PRODUCING LIGHT PULSES FOR CHARACTERIZING, STANDARDIZING OR CALIBRATING PHOTODETECTORS IN FLOW CYTOMETERS
DISPOSITIF DE GÉNÉRATION DES IMPULSIONS LUMINEUSES DESTINÉ À LA CARACTÉRISATION, À LA NORMALISATION OU À L'ÉTALONNAGE DE PHOTODÉTECTEURS DANS DES CYTOMÈTRES À FLUX

(30) Priorität: 22.11.2019 EP 19210901
(43) Veröffentlichungstag der Anmeldung: 26.05.2021
(73) Patentinhaber: A·P·E Angewandte Physik & Elektronik GmbH, 13053 Berlin (DE)
(72) Erfinder: VON VOLKMANN, Konrad, 13353 Berlin (DE); POPIEN, Jan, 10247 Berlin (DE); REUTER, Frank, 12683 Berlin (DE)
(74) Vertreter: Hertin und Partner Rechts- und Patentanwälte PartG mbB

(56) Entgegenhaltungen:
- EP-A1- 2 464 200
- US-A1- 2009 057 534
- US-A1- 2015 098 244
- CLAUDIA GIESECKE ET AL: "Determination of background, signal-to-noise, and dynamic range of a flow cytometer: A novel practical method for instrument characterization and standardization : Determination of Flow Cytometer's SNR and DNR", NIH PUBLIC ACCESS AUTHOR MANUSCRIPT, Bd. 91, Nr. 11, 27. September 2017 (2017-09-27), Seiten 1104-1114, XP055697108, ISSN: 1552-4922, DOI: 10.1002/cyto.a.23250

## Beschreibung

Die Erfindung betrifft eine Vorrichtung zur Erzeugung von Lichtpulsen zur Charakterisierung, Standardisierung und/oder Kalibrierung von Photodetektoren, bevorzugt innerhalb eines Durchflusszytometers oder Mikroskops. Zu diesem Zweck umfasst die Vorrichtung Emissions-Lichtquellen, welche mit vorgegebener Signalform zur Emission von Lichtpulsen angeregt werden. Die Vorrichtung zeichnet sich durch einen Feedback-Mechanismus aus, welcher auf der Bereitstellung separater, in Reihe geschalteter Regel-Lichtquellen basiert, deren Abstrahlung von einem Feedback-Detektor erfasst wird. In bevorzugten Ausführungsformen umfasst die Vorrichtung ein oder mehrere Emissionsgruppen mit kreisförmig angeordneten, mehrfarbigen Emissions-Lichtquellen. Zur Bereitstellung unterschiedlicher Intensitätsstufen können die Emissions-Lichtquellen bzw. Emissionsgruppen mit unterschiedlicher Effizienz in einen Lichtleiter eingekoppelt werden. In weiteren Aspekten betrifft die Erfindung zudem Verwendungen der Vorrichtung sowie Systeme oder Kits umfassend die Vorrichtung.

### Hintergrund und Stand der Technik

Die Durchflusszytometrie beinhaltet die Analyse optischer Signale, die durch Suspensionen von Partikeln oder biologischen Zellen erzeugt werden, welche in einem Flüssigkeitsstrom einen fokussierten Lichtstrahl passieren. Die von den Partikeln abgestrahlten optischen Signale werden durch den Betrieb eines Detektors, wie z.B. einer Photodiode oder einem Photomultiplier, in Spannungs- und Zeitimpulssignale umgewandelt und analysiert.

Moderne Zytometer erlauben die gleichzeitige multiparametrische Analyse physikalischer und biologischer Eigenschaften Tausenden Partikeln bzw. Zellen pro Sekunde. Die Durchflusszytometrie wird daher routinemäßig in der Grundlagenforschung eingesetzt, um Populationen biologischer Zellen zu untersuchen, die eine Heterogenität des Zelltyps oder der Gen-/Proteinexpression aufweisen können. Auch in der Klinik wird die Durchflusszytometrie für die Routinediagnostik unter anderem in der Hämatologie, Infektiologie und Immunologie eingesetzt und hat darüber hinaus viele weiteren Anwendungen in Forschung und klinischer Praxis. Beispielsweise kann mittels eines FACS-Durchflusszytometers (*fluorescently activated cell sorting*) eine Sortierung von Zellen nach gewünschten Eigenschaften unter Verwendung entsprechender Fluoreszenzmarker erfolgen. Die Qualität der Daten eines Durchflusszytometrie-Experimentes hängt neben der Probenvorbereitung wesentlich von der Charakterisierung bzw. Kalibration der instrumentellen Komponenten ab.

Um höchsten Anforderungen an eine Datenqualität genügen zu können, sollte daher der Einfluss von Instrumentenparametern wie Laserausrichtung, Fluidstabilität oder Konfiguration der Optik sowie Photodetektoren erfasst und optimiert werden. In modernen Durchflusszytometern wird daher die optische Konfiguration (u.a. Einstellung von Filtern und dichroischen Spiegeln) und die Verstärkung (*gain*) der Detektoren (insbesondere PMTs) auf die Anforderungen des Experiments abgestimmt.

Die Praxis zeigt, dass häufig der PMT-Gain außerhalb des optimalen Bereiches gewählt wird, wodurch es zu Qualitätseinbußen kommt.

Aus technischer Sicht sind zwei Parameter wichtig, um zu verstehen, wie die optimale Nutzung eines PMT von der Einstellung des PMT-Gain abhängt, welcher durch die Spannung gesteuert wird. Der erste Parameter ist das Signal-Rausch-Verhältnis (SNR), ein Maß, das den Pegel eines gewünschten Signals mit dem Pegel eines Hintergrundsignals vergleicht. Der zweite Parameter ist der dynamische Erfassungsbereich (DNR), ein Maß, das den Pegel des minimal erfassbaren Signals und des maximal erfassbaren Signals miteinander vergleicht. Beide Parameter sind entscheidend für die Einstellung der PMT-Spannung bzw. des PMT-Gain auf einen optimalen Arbeitspunkt und damit auf die höchste Sensitivität.

Für Durchflusszytometer wird im Allgemeinen die Sensitivität des Instruments durch dessen Fähigkeit erfasst, ein (minimales) Lichtsignal (z.B. von fluoreszierenden Zellen) im Unterschied zum Hintergrundrauschen zu detektieren oder unterschiedliche Lichtsignale (z.B. von unterschiedlichen Zellpopulationen) untereinander aufzulösen.

Im Stand der Technik sind verschiedene experimentellen Ansätze bekannt, um die Sensitivität eines Durchflusszytometers anhand der PMT-Spannung zu charakterisieren. In kommerziellen Durchflusszytometer werden zu diesem Zweck beispielsweise routinemäßig Qualitätskontrollprogrammen implementiert, (z.B. Cytometer Setup and Tracking (CS&T) in Becton Dickinson (BD, San Jose, CA) FACSDiva-Software).

Die bekannten Qualitätskontrollmethoden basieren auf der Verwendung von Beads und sind von den Eigenschaften der Beads abhängig. Die Auswahl der PMT-Spannungen wird daher von intrinsischen Bead Eigenschaften (z.B. Größenschwankungen) beeinflusst, welche sich von tatsächlich zu messenden biologischen Zellen unterscheiden.

Die bekannten Bead-basierten Verfahren werden zusätzlich durch die Laserausrichtung, das Hintergrundrauschen der Laser oder Elektronik sowie der Signalverarbeitung beeinflusst. Die auf Basis dieser Verfahren optimierte PMT-Spannung spiegelt daher nicht die optimale Ausnutzung des PMTs selbst wieder, sondern wird von externen Faktoren beeinflusst. Eine zuverlässige Optimierung für die tatsächlichen experimentellen Anforderungen erfolgt nicht.

Der Einfluss der gewählten PMT-Spannung auf die Versuchsergebnisse ist schwer vorherzusagen. Der DNR eines bestimmten PMTs reicht oft nicht aus, um alle Ereignisse von Interesse in der Größenordnung darzustellen. Infolgedessen muss die PMT-Spannung reduziert werden, was zu einem niedrigeren SNR führen kann.

Im Stand der Technik gibt es daher Bestrebungen Mittel bzw. Verfahren bereits bereitzustellen um die DNR und SNR von PMTs von Durchflusszytometern in Abhängigkeit der PMT-Spannung zu bestimmen und auf Basis der Messergebnisse zu optimieren.

Einen eleganten Ansatz auf Basis des physikalischen Detektionsprinzips der PMTs hatte Harald Steen bereits im Jahre 1992 vorgeschlagen (H. Steen Cytometry 13:822-830, 1992).

PMTs nutzen das Funktionsprinzip eines externen photoelektrischen Effekts. Ein primäres Photoelektron, das durch ein auf die Photokathode auftreffendes Photon erzeugt wird, wird durch Anlegen einer Spannung verstärkt. Im Ergebnis erzeugt der PMT einen Strom, welcher proportional zur Anzahl der erfassten Photonen ist. Sowohl der primäre Emissionsprozess als auch die Elektronenvervielfachung folgen statisch einer Poisson-Verteilung. Wie Steen im Jahre 1992 zeigen konnte, können diese Eigenschaften verwendet werden, um die absolute Anzahl der Photoelektronen (N_{PE}) zu quantifizieren, welche an einer PMT-Photokathode erzeugt werden.

Es gilt N_{PE} = 1 / CV², wobei CV den Variationskoeffizienten (*coefficient of variation*) der auftreffenden Photonen kennzeichnet. Im Betriebsbereich ist die Anzahl der Photoelektronen (N_{PE}) unabhängig von der PMT-Spannung und hängt ausschließlich von den einfallenden Photonen ab. Folglich kann der Betriebspunkt grundsätzlich bestimmt werden, indem dem Durchflusszytometer ein stabiles Eingangslichtsignal zugeführt und die erfasste N_{PE} über verschiedene PMT-Spannungen ausgewertet wird.

Giesecke et al. 2017 offenbaren entsprechende Messverfahren auf Basis einer Präzisions-LED-Lichtimpulsquelle, welche unter dem Namen quantiFlash^{®} kommerziell erhältlich ist. Um den optimalen Arbeitspunkt der PMTs zu bestimmen, werden SNR- und DNR-Kurven über einen PMT-Spannungsbereich von 400 V bis 1.000 V erzeugt und ausgewertet.

Die Möglichkeit der Bestimmung der SNR und DSR auf Basis der obig beschriebenen statischen Prinzipien hängt essentiell von der Stabilität und präzisen Kalibration der Lichtquellen ab, welche die Lichtpulse zu den Quantifizierungszwecken generieren. Der bekannte quantiFlash^{®} zeichnet sich in dieser Hinsicht durch extrem stabile Lichtpulse mit CVs von weniger als <0,1% aus. Das Gerät umfasst eine Reihe von intensitätskalibrierten LEDs in Kombination mit festen optischen Abschwächern, welche einen DNR von 0 ... - 96 dB in Bezug auf die ausgehende Lichtleistung erreichen.

Ein programmierbarer digitaler Wellenformgenerator liefert die Impulsform für jede LED und erlaubt die Einstellung verschiedener Pulsformen in Abhängigkeit des vorgesehenen Messprotokolls. Zur Einhaltung der erforderlichen präzisen Kontrolle der Pulsform ist eine Licht-Feedback-Schleife implementiert, welche im Zusammenspiel eine streng lineare Korrelation der ausgehenden Lichtleistung auf dem Steuersignal festlegt.

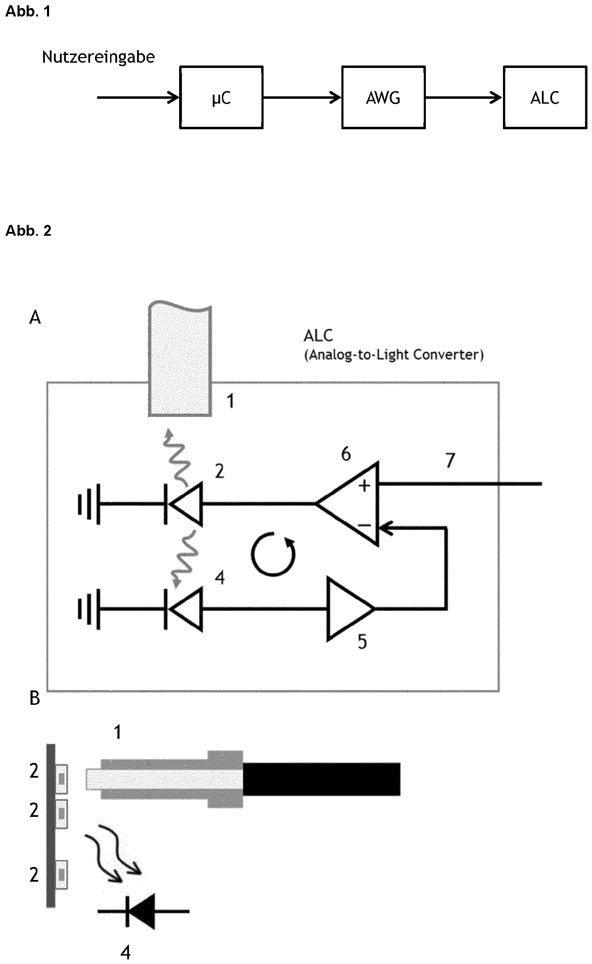

Die Licht-Feedback-Schleife basiert auf einer Feedback-Photodiode, welche dazu eingerichtet ist, das von den LEDs emittierte Licht kontinuierlich zu messen und in ein elektrisches Feedback-Signal zu überführen. Mittels einer Regelschaltung, beispielsweise umfassend einen Transimpedanz-Verstärker, kann die Stromzufuhr zur LED mit hoher Präzision nachgeführt werden (vgl. Fig. 2A). Ein derartiges Nachführen ist erforderlich, da die LEDs gegenüber dem Steuersignal eine intrinsisch verzögerte Antwort aufweisen. Zusätzlich sind LEDs stark nichtlineare Bauteile. Um eine definierte und frei einstellbare Form des Lichtpulses gewährleisten zu können, ist eine Feedback-Regelung unabdingbar. Ohne Licht-Feedback-Schleifen könnten insbesondere steile Flanken, wie bei einem Rechteckpuls, oder mathematisch exakte Pulsformen in Gaußform nicht hinreichend abgebildet werden.

Um eine hohe Dynamik (also einen weiten Intensitätsbereich für die Lichtpulse) abdecken zu können, werden drei identische LEDs bereitgestellt, welche anhand ihrer relativen Positionierung zu einer Ausgangsfaser mit unterschiedlicher Effektivität in selbige einkoppeln (vgl. Fig. 2B). Die Emissions-LED, welche nahe an der Ausgangsfaser vorliegt, wird mit der höchsten Effektivität in die Ausgangsfaser eingekoppelt und kann einen Bereich hoher Pulsintensitäten abdecken. Dem gegenüber koppelt die LED, welche entfernter von der Ausgangsfaser positioniert ist, nur mit verminderter Effektivität in selbige ein, sodass dieser einer geringen Intensitätsstufe entspricht.

Die Positionierung der LEDs mit unterschiedlichen Abständen zur Ausgangsfaser erlaubt mithin die Einstellung unterschiedlicher Intensitätsstufen. Während jede der LEDs stets in ihrem Arbeitsbereich betrieben wird, kann zuverlässig eine hohe Dynamik erreicht werden.

Die Feedback-Diode ist bevorzugt derart positioniert, dass das Licht jeder der drei LEDs zumindest teilweise auf die Feedback-Diode emittiert.

Während die bekannte Vorrichtung sich durch eine hochpräzise Regelung und eine breite Dynamik auszeichnet, besteht dennoch Potential zur Verbesserung.

Zum einen bedingen die unterschiedlichen Faserabstände der LEDs zwangsläufig auch eine unterschiedliche Beabstandung zur Feedback-Diode, sodass individuelle Feedbackeinstellungen für jede der drei LEDs erforderlich sind und der Aufwand erhöht wird. Darüber hinaus ist mittels der bekannten Anordnung der Feedback-Diode stets ein Kompromiss zwischen einer optimalen Einkopplung der jeweiligen Emissions-LED in die Ausgangsfaser und einer effektiven Ausrichtung auf die Feedback-Diode notwendig. Auch eine Erweiterung auf verschieden Farben mit mehreren Intensitätsstufen wäre mit dem bekannten Aufbau nur mit hohem Aufwand möglich.

Im bekannten Stand der Technik findet der Fachmann hierzu nur ungenügend Anregung, selbst unter Rückgriff auf entlegenere technische Gebiete.

US 2009/057534 A1 offenbart die Bereitstellung eines LED-Arrays für die Hintergrundbeleuchtung eines LCD-Displays. Zur Regulation der Intensität der LEDs schlägt die US 2009/057534 A1 vor, den LEDs jeweils Lichtdetektoren zuzuordnen. Eine Steuereinheit reguliert auf Basis der Messdaten separat die Helligkeit der LED durch Adaption der Shunt-Steuersignale. Im Gegensatz zu bekannten LED-Arrays des Standes der Technik soll hierdurch eine homogenere Ausleuchtung ermöglicht werden.

US 2015/098244 A1 betrifft ebenfalls eine Verwendung mehrerer LEDs für die Hintergrundbeleuchtung eines TFT-LCD-Display. Die LEDs werden als eine *side-type* Hintergrundbeleuchtung bereitgestellt. Gemäß der US 2015/098244 A1 ist es bevorzugt die LEDs seitlich in einen Lichtleiter mit einer Emissionsoberfläche einzukoppeln, sodass die punktförmige LED-Lichtquellen in einen Lichtlinie zur Hintergrundbeleuchtung überführt werden.

Eine kontrollierte Bereitstellung von Lichtpulsen mit einer vorgegebenen zeitlichen Signalform, beispielsweise einer Gaussform oder einer flat-top Pulsform ist weder in US 2009/057534 A1 noch US 2015/098244 A1 vorgesehen. Ebenso wird kein zeitliches Nachführen einer vorgegebenen Signalform für Lichtpulse mittels einer Feedback-Regulation vorgeschlagen.

Aus EP 2 464 200 A1 ist eine dimmbare Lichtquelle umfassend mehrere LEDs bekannt. Ein einzelner Lichtdetektor ist nahe den LEDs angeordnet und soll durch entsprechende Feedbackregulation eine präzisere Einstellung der Helligkeit erlauben. EP 2 464 200 A1 schlägt somit eine Steuerung von mehreren in Reihe geschalteten Emissions-LED mittels eines einzelnen Sensors vor, welcher das Licht der emittierenden LEDs erfasst und daraus für sämtliche LEDs eine Helligkeitsanpassung ermöglichen soll. Eine separate Feedback-Regulation der Helligkeit einzelner LEDs wird nicht ermöglicht.

Zudem ist auch für die EP 2 464 200 A1 weder eine Erzeugung von Lichtpulsen mit einer vorgegebenen Signalform vorgesehen, noch wird eine Feedback-Regulation zum zeitlichen Nachführen eines elektrischen Steuersignals zur Gewährleistung der vorgegebenen Signalform
beschrieben.

In CLAUDIA GIESECKE ET AL: "Determination of background, signal-to-noise, and dynamic range of a flow cytometer: A novel practical method for instrument characterization and standardization ",NIH PUBLIC ACCESS AUTHOR MANUSCRIPT, Bd. 91, Nr. 11, 27. September 2017 (2017-09-27), Seiten 1104-1114 ist die Verwendung einer geregelten Lichtquelle vom Typ "quantiFlash" in der Charakterisierung von Durchflusszytometern beschrieben.

### Aufgabe der Erfindung

Aufgabe der Erfindung ist es, eine Vorrichtung zur Erzeugung von Lichtpulsen zur Charakterisierung, Standardisierung und/oder Kalibrierung von Photodetektoren bereitzustellen, welche die Nachteile des Standes nicht aufweist. Insbesondere war es eine Aufgabe der Erfindung eine Vorrichtung zur Erzeugung von Lichtpulsen zu entwickeln, welche sich durch eine hochpräzise Regelung der Lichtpulse auszeichnet und mittels eines einfachen, kompakten Aufbaus sowohl eine hohe Dynamik als Skalierbarkeit (u.a. auf eine Mehrzahl von Farben) erlaubt.

### Zusammenfassung der Erfindung

Die Aufgabe wird durch die Merkmale der unabhängigen Ansprüche gelöst. Bevorzugte Ausführungsformen der Erfindung sind in den abhängigen Ansprüchen beschrieben.

Die erfindungsgemäße Vorrichtung zeichnet sich durch Bereitstellung einer zu jeder Emissions-Lichtquelle zugeordneten Regel-Lichtquelle aus, deren Emission von einem Feedback-Detektor erfasst wird. Die vorgeschlagene Lösung stellt mithin eine Abkehr von bekannten Licht-Feedback-Schleifen dar, welche darauf abzielen unmittelbar das Licht einer Emissionslichtquelle zu detektieren. Stattdessen wird eine separate Regel-Lichtquelle genutzt, wobei die vorgesehene Reihenschaltung ein synchrones Verhalten gewährleistet. Insbesondere ist der zeitliche Verlauf des Emissionssignales der Regel-Lichtquelle analog zur Emissions-Lichtquelle gegenüber der vergebenen Signalform verzögert.

Vorteilhafterweise führt eine Regelung des elektrischen Signals anhand der Regel-Lichtquelle mithin gleichermaßen zu einer präzisen Regelung des gewünschten Emissionssignales der Emissions-Lichtquelle. Bevorzugt handelt es sich bei dem jeweiligen Paar aus Regel-Lichtquelle und Emissions-Lichtquelle um Lichtquellen mit im Wesentlichen identischen Betriebscharakteristika. Insbesondere sollte das zeitliche Emissionsverhalten bezüglich einer Stromänderung möglichst ähnlich sein. Die Bedingung kann leicht erfüllt werden, in dem bevorzugt nach Herstellerangaben identische Lichtquellen, beispielsweise LEDs mit identischen Betriebsparametern, als Regel- bzw. Emissions-Lichtquellen verwandt werden. Etwaige Abweichungen könnten zudem anhand einer entsprechenden Kalibration ausgeglichen werden.

Die räumliche Trennung von Emissions- und Regel-Lichtquelle führt zu einer erhöhten konstruktiven Flexibilität und damit zu einer Reihe von Vorteilen.

Zum einen kann auch bei Verwendung mehrerer Emissions-Lichtquellen (z.B. zur Bereitstellung verschiedenen Intensitätsstufen) stets eine optimale Ausleuchtung der Feedback-Diode durch die Regel-Lichtquellen gewährleistet werden.

Während die Emissions-Lichtquellen in unterschiedlichen Abstand zum Lichtleiter vorliegen, ist dies für die Regel-Lichtquellen nicht notwendig. Stattdessen können die Regel-Lichtquellen kompakter angeordnet werden, sodass alle Regel-Lichtquellen optimal auf den Feedback-Detektor strahlen.

Die Möglichkeit einer kompakten Anordnung führt zudem dazu, dass unterschiedliche Feedbackeinstellungen für einzelne Emissions-Lichtquellen entbehrlich werden. Stattdessen kann für jede Emissions-Lichtquelle bzw. jedes Paar von Emissions- und Regel-Lichtquelle die gleiche Feedbackeinstellung verwandt werden. Der Aufwand vermindert sich.

Ein weiterer Vorteil der Bereitstellung eines getrennten Regelmechanismus auf Basis einer Regel-Lichtquelle besteht in der vereinfachten Skalierbarkeit. So erlaubt die Doppelung es, sowohl die Emissions-Lichtquellen in Bezug auf den Lichtleiter als die Regel-Lichtquellen in Bezug auf die Regel-Lichtquelle unabhängig von einander äußerst kompakt anzuordnen.

Im Gegensatz zu bekannten Lösungen wird somit auf einfache Weise eine Erweiterung auf mehrere Farben (z.B. 6 oder mehr) bei gleichzeitig verschiedenen Intensitätsstufen erreicht.

Die Verwendung einer separaten Regel-Lichtquelle zur Feedback-Regulation einer Emissions-Lichtquelle stellt eine Abkehr vom Bekannten dar für welche der Fachmann im Stand der Technik auch keine Hinweise erhält. So wird beispielsweise in der EP 2 464 200 A1 vorgeschlagen einen Lichtdetektor nahe den Emissions-LEDs anzuordnen, um mittels eine Feedback-Regulation die Helligkeit zu steuern. In der EP 2 464 200 A1 tragen jedoch alle Emissions-Lichtquellen zum Feedbacksignal bei. Eine Bereitstellung einer getrennten Regel-Lichtquelle wird für die dimmbare Lichtquelle der EP 2 464 200 A1 weder offenbart noch nahegelegt. Wie vorliegend beschrieben, führt eine solche getrennte Regelung im Kontext einer erfindungsgemäßen Vorrichtung zu Bereitstellung dynamisch regulierbarer Lichtpulse zu einer Reihe von Vorteilen. Die erfindungsgemäße Vorrichtung zeichnet sich nicht nur durch einen erhöhten Präzisionsgrad zur Erzeugung der Lichtpulse mit gewünschter Signalform aus, sondern zudem durch die Möglichkeit eine Vielzahl von Farben und/oder Intensitätsstufen auf kompakte Weise zu realisieren. Die erfindungsgemäß bereitgestellte Vorrichtung erlaubt somit eine deutlich umfassendere Charakterisierung, Standardisierung und/oder Kalibrierung von Photodetektoren, insbesondere eines Durchflusszytometers als dies für bekannte Vorrichtungen aus dem Stand der Technik der Fall war.

Im Sinne der Erfindung bezeichnet der Begriff "Lichtquelle" bevorzugt eine Komponente, welche in Abhängigkeit eines angelegten elektrischen Stromes elektromagnetische Strahlung bzw. Licht emittiert. Unter dem Begriff "Licht" wird bevorzugt das gesamte elektromagnetische Spektrum vom Ultravioletten Bereich (UV-A bis UV-C: 100 nm bis 380 nm, bevorzugt UV A und UV B: 280 nm bis 380 nm) über den sichtbaren Bereich (380 nm bis 780 nm) bis hin zum Infrarot Bereich (780 nm bis 1mm, bevorzugt near infrared (NIR) 780 nm bis 1.4 µm, shortwavelength infrared (SWIR): 780 nm bis 3 µm) verstanden.

Im Stand der Technik sind eine Vielzahl strombetriebener Lichtquellen bekannt. Besonders bevorzugt handelt es sich bei den Lichtquellen um Leuchtdioden (*light-emitting diodes* bzw. kurz LEDs).

In einer bevorzugten Ausführungsform ist die Vorrichtung dadurch gekennzeichnet, dass es sich bei der mindestens einen Emissions-Lichtquelle und der mindestens einen Regel-Lichtquelle um Leuchtdioden (LEDs) handelt.

LEDs sind bevorzugt lichtemittierende Halbleiter-Bauelemente, deren elektrische Eigenschaften einer Diode entsprechen. Fließt durch die LED elektrischer Strom in Durchlassrichtung, so wird elektromagnetische Strahlung emittiert. Die Wellenlänge kann durch das verwandte Halbleitermaterial bzw. die Dotierung eingestellt werden. Aufgrund ihrer geringen Größe, einer schnellen Strom-Emissions-Dynamik und der zur Verfügung stehenden Bandbreite an Farben eignen sich LEDs in besonderem Maße zur Erzeugung von Lichtpulsen in der beschriebenen Vorrichtung.

Die Emissions- und Regel-Lichtquellen liegen bevorzugt als bauartgleiche Lichtquellen vor, beispielweise als LEDs mit identischen Betriebsparameter, wobei sich Emissions- und Regel-Lichtquellen anhand ihrer Funktion innerhalb der Vorrichtung unterscheiden.

Während Emissions-Lichtquellen für eine Kopplung in den Lichtleiter positioniert bzw. konfiguriert sind, strahlen die Regel-Lichtquellen auf einen Feedback-Detektor ab.

Lichtleiter meinen bevorzugt transparente Bauteile, wie Fasern, Röhren oder Stäbe, welche das Licht über kurze oder lange Strecken transportieren bzw. leiten können. Besonders bevorzugt kann es sich bei dem Lichtleiter, um einen Lichtwellenleiter handeln, welcher, eine oder mehrere Fasern umfasst, die beispielsweise aus Quarzglas oder Polymeren gebildet werden und Licht leiten können. Zu diesem Zweck umfassen Lichtwellenleiter bevorzugt einen Mantel mit einem Brechungsindex, welcher niedriger ist als der des Kernes, um eine Totalreflektion zu ermöglichen. Lichtwellenleiter finden auf verschiedenen technischen Gebieten Anwendung, wobei die Nachrichtentechnik eine der Verbreitesten darstellt. Synonym verwandte Begriffe sind Glasfaserkabel, Lichtleitkabel, im Englisch auch *optical fiber.*

Es ist jedoch auch verbreitet Lichtwellenleiter in optischen Instrumenten zu verwenden, um unabhängig von der Position die Emission einer Lichtquelle zu gewünschten Einfallpunkten zu leiten. Im Kontext der beschriebenen Vorrichtung zur Charakterisierung, Standardisierung und/oder Kalibrierung von Photodetektoren erlaubt die Einkopplung der von der Emissions-Lichtquelle emittierten Strahlung in einen Lichtleiter, eine einfache und distorsionsarme Weiterleitung der Lichtpulse auf die zu charakterisierenden Photodetektoren. Typischerweise befinden sich diese in einem Durchflusszytometer oder Mikroskop. Bevorzugt kann der Lichtleiter daher weiterhin auch einen Anschluss an ein Durchflusszytometer oder Mikroskop umfassen.

Die Emissions-Lichtquelle dient mithin der Erzeugung jener Lichtpulse, welche die Vorrichtung zu Kalibrierungszwecken bereitstellt. Die Genauigkeit der Charakterisierung, Standardisierung und/oder Kalibrierung der Photodetektoren wird bevorzugt durch die besondere präzise Generation von Lichtpulsen unterstützt. Hierbei weist der zeitliche Verlauf der Intensität der emittierten Lichtpulse bevorzugt eine besonders hohe Übereinstimmung mit einer vorgegebenen Signalform auf. Unter Ausnutzung statischer Gesetzmäßigkeiten kann mittels der erzeugbaren Lichtpulse u.a. eine Charakterisierung des dynamische Erfassungsbereiches (engl. *dynamic ränge,* DNR) oder des Signal-Rausch-Verhältnis (engl. *signal-to-noise ratio,* SNR) der Photodetektoren erfolgen (vgl. Steen 1992).

Für die Vorgabe und Kontrolle der zu erzeugenden Lichtpulse umfasst die Vorrichtung eine Steuereinheit, welche ein elektrisches Signal zur Einspeisung in die Emissions-Lichtquelle anhand einer vorgegebenen Signalform erzeugt. Eine vorgegebene Signalform meint bevorzugt einen vorgegebenen zeitlicher Verlauf für die Intensität der zu erzeugenden Lichtpulse, beispielweise mit einer Gauß- oder "flat-top"-Pulsform. Bevorzugt kann die Steuereinheit zwei konzeptionelle Komponenten umfassen. Zum einen eine Einheit zur Bereitstellung einer gewünschten Signalform der Pulse (z.B. auf Basis eines User-Inputs). Zum anderen eine Komponente, welcher die gewünschte Signalform in ein elektrisches (Strom-)signal umwandelt, welches in die Lichtquellen eingespeist wird

In einer bevorzugten Ausführungsformen der Erfindung umfasst die Steuereinheit eine Datenverarbeitungseinheit, bevorzugt einen Mikroprozessor, und einen Funktionsgenerator, bevorzugt einen Arbiträr-Funktionsgenerator.

Im Sinne der Erfindung bezeichnet eine Datenverarbeitungseinheit bevorzugt eine Einheit, welche zum Empfang, Senden, Speichern und/oder Verarbeiten von Daten, bevorzugt im Hinblick auf die Vorgabe einer Signalform, geeignet und konfiguriert ist. Die Datenverarbeitungseinheit umfasst bevorzugt einen integrierten Schaltkreis, einen Prozessor, einen Prozessorchip, Mikroprozessor oder Mikrokontroller zur Verarbeitung von Daten, sowie optional einen Datenspeicher, beispielsweise eine Festplatte, einen *random access memory* (RAM), einen read*only memory* (ROM) oder auch einen *flash memory* zur Speicherung der Daten.

Besonders bevorzugt umfasst die Datenverarbeitungseinheit einen Mikroprozessor, d.h. einen Prozessor, welcher sich durch kleine Abmaße im Bereich von einigen mm auszeichnet und wobei bevorzugt alle Bausteine des Prozessors auf einem Mikrochip oder integriertem Schaltkreis (engl. *integrated circuit, IC*) vorliegen. Der Mikroprozessor kann bevorzugt auch ein Mikrokontroller sein, welcher neben dem Prozessor weitere periphere Elemente auf dem Mikrochip integriert und beispielsweise über einen Datenspeicher verfügt.

Die Datenverarbeitungseinheit stellt bevorzugt Information einer gewünschte Signalform für die Lichtpulse an einen Funktionsgenerator bereit, welche dafür eingerichtet ist, eine entsprechende elektrische Signalform zu generieren.

Im Sinne der Erfindung bezeichnet ein Funktionsgenerator ein Gerät bzw. eine elektrische Komponente zum Erzeugen elektrischer Signale mit unterschiedlichen Signalformen. Hierzu können sowohl periodische als auch beliebige, nicht-periodische Signale zählen. Im Stand der Technik sind beispielsweise analoge und digitale Funktionsgeneratoren bekannt. Typische digitale Funktionsgeneratoren zur Erzeugung periodischer Signalformen (z.B. Sinus, Rechteck, Dreieck oder Sägezahnformen) arbeiten zu diesem Zweck mit direkter digitaler Synthese. Die Genauigkeit ist bei den digitalen Funktionsgeneratoren deutlich höher, als bei einer analoger Schaltungstechnik. Als Taktquelle kann ein Quarzoszillator dienen.

In einer besonders bevorzugten Ausführungsform ist der Funktionsgenerator ein Arbiträrgenerator, welcher synonym als Arbiträr-Funktionsgenerator oder englisch *Arbitrary waveform generator,* AWG bezeichnet werden kann. Ein Arbiträrgenerator ist ein Funktionsgenerator, der beliebig geformte Ausgangssignale, insbesondere periodisch, wie nicht-periodische Signale, erzeugen kann. Typische Arbiträrgeneratoren arbeiten ebenfalls nach dem Prinzip einer direkten digitalen Synthese. Die gewünschte Signalform kann hierzu in einem Halbleiterspeicher abgelegt werden, dessen Speicherstellen durch einen in der Frequenz veränderbaren Adressgenerator zyklisch abgerufen werden. Ein Digital-Analog-Umsetzer mit anschließendem Tiefpassfilter und Ausgangsverstärker erzeugt aus den Zahlenwerten das elektrische Ausgangssignal.

Stand-Alone Geräten des Standes der Technik umfassen in der Regel selbst eine Datenverarbeitungseinheit, beispielsweise einen zentralen Mikroprozessor, welcher die Funktionen des Funktionsgenerators und sowie eine Vorgabe von Signalformen bzw. deren kennzeichnenden Parametern anhand von Nutzereingaben vornimmt.

Im Sinne der vorliegenden Beschreibung bezeichnet der Funktionsgenerator bevorzugt jene Komponenten der Steuereinheit, welche eine Datenverarbeitungseinheit, wie einen Mikroprozessor, zur Verarbeitung von Nutzereingaben nachgeschaltet ist.

In einer bevorzugten Ausführungsform der Erfindung ist die Vorrichtung dadurch gekennzeichnet, dass die Steuereinheit Eingabemittel zur Festlegung von Parametern der zu erzeugende Lichtpulse umfasst und die Datenverarbeitungseinheit konfiguriert ist, auf Basis der vorgegebenen Parameter den Funktionsgenerator zur Erzeugung des elektrischen Signals zu steuern.

Als Eingabemittel eignen sich Benutzerschnittstellen (*userinterfaces*), welche es für einen Nutzer ermöglichen, die Eingabe von Parametern zu tätigen. Hierzu zählen beispielsweise Tastaturen, Touchpads, eine Computermaus oder auch einfache Bedienelemente wie Tastschalter, Drehschalter, Wippschalter mit entsprechender Zuordnung zu den gewünschten Parametern.

Die Parameter charakterisieren bevorzugt die zu erzeugenden Lichtpulse bzw. hierfür vorzugebenen elektrischen Pulse.

Beispielsweise kann ein Parameter eine Art der Pulsform festlegen, wobei es sich beispielsweise um eine Gaußform, eine Rechtecksform, eine Dreiecksform oder eine "flat-top"-Pulsform handeln kann. Die Pulsform bezeichnet bevorzugt den zeitlichen Verlauf, also eine Funktion der Lichtintensität bzw. des elektrischen Signals in Abhängigkeit der Zeit.

Ein Puls in Gaußform wird mithin einen zeitlichen Verlauf eine Gauß-Kurve aufzeigen. In Analogie zur statischen Bedeutung der Gaußverteilung wird die Breite durch eine Standardabweichung festlegt. Eine "flat-top" oder abgeflachte Pulsform kennzeichnet Pulse mit einer über eine gewisse Zeitdauer im Wesentlichen konstanten Höhe. Statt eines Pulsmaximums weisen flat-top Pulse ein maximales Plateau über eine wesentliche Dauer des Pulses auf.

In einer weiteren bevorzugten Ausführungsform ist ein Parameter zur Vorgabe der zu erzeugenden Lichtpulse die Pulsbreite. Die Pulsbreite kann bevorzugt unabhängig von der Art der Pulsform als sogenannte Halbwertsbreite (*Full Width at Half Maximum,* FWHM) definiert werden. Bekanntermaßen bezeichnet die Halbwertsbreite einer Funktion mit einem Maximum die Differenz zwischen den beiden Argumentwerten, für die die Funktionswerte auf die Hälfte des Maximums abgesunken sind. Mit anderen Worten entspricht die Halbwertsbreite der Breite der Funktion bei "halber Höhe". Im Falle eines Pulses mit einer Gaußform entspricht die FWHM beispielsweise ungefähr dem 2,3548fachen Wert der Standardabweichung. Bevorzugte Pulsbreiten liegen im Bereich von 0,1 µs bis 100 µs, besonders bevorzugt von 1 µs bis 10 µs.

In einer weiteren bevorzugten Ausführungsformen ist ein Parameter zur Vorgabe der zu erzeugenden Lichtpulse die Pulshöhe bzw. Amplitude. Beispielsweise kann ein Intensitätswert für die Amplitude der zu emittierenden Pulse festgelegt werden. Zur Gewährleistung entsprechender Amplituden der Lichtpulse kann die Amplitude der elektrischen Pulse angepasst werden. D.h. die maximale Stromstärke wird in Abhängigkeit einer höher oder niedriger einzustellenden Lichtintensität gesteigert bzw. reduziert. Darüber hinaus kann der Parameter zur Erreichung einer vorgegebenen Intensität der Lichtpulse auch die selektive Ansteuerung unterschiedlicher Emissions-Lichtquellen bedingen, welche wie beschrieben, mit unterschiedlicher Effektivität in den Lichtleiter einkoppeln.

In einer weiteren bevorzugten Ausführungsform ist ein Parameter zur Vorgabe der zu erzeugenden Lichtpulse die Wiederholungsrate. Für die Verwendung der Vorrichtung zur Charakterisierung, Standardisierung oder Kalibrierung von Photodetektoren ist es bevorzugt eine Serie von Pulsen mit stabiler Pulsform in regelmäßiger Wiederholung zu erzeugen. Die Wiederholungsrate gibt die Frequenz der zu erzeugenden Lichtpulse an und liegt in bevorzugten Ausführungsformen zwischen 0,1 und 100 kHz, besonders bevorzugt zwischen 0,5 kHz und 40 kHz.

Die Parameter zur Vorgabe der zu erzeugenden Lichtpulse können einerseits durch entsprechende Eingabemittel durch einen Nutzer festgelegt. Anderseits kann es auch bevorzugt sein, die Parameter gerätespezifisch festzulegen.

Die Steuereinheit bzw. bevorzugt eine darauf befindliche Datenverarbeitungseinheit, ist bevorzugt zum Lesen der eingegeben oder gerätespezifisch festgelegen Parameter konfiguriert. Anhand der Parameter sowie ggf. weitere Kalibrierdaten stellt die Datenverarbeitungseinheit, bevorzugt der Mikroprozessor, Information über eine vorgegebene Signalform zusammen, welche an den Funktionsgenerator weitergegeben werden. Der Funktionsgenerator erzeugt auf deren Basis ein elektrisches Signal, welches bevorzugt elektrische Pulse umfasst, die zur Erzeugung der gewünschten Lichtpulse eingerichtet sind.

Einige Parameter, wie die Pulsform oder Pulsbreite, können sich entsprechen. D.h. die Parameter sind für die elektrischen Pulse gleich den Parametern für die gewünschten Lichtpulse Für andere Parameter wie beispielsweise eine Amplitude bzw. Pulshöhe können Umrechungsdaten hinterlegt sein.

In einer bevorzugten Ausführungsform der Erfindung umfasst die vorgegebene Signalform elektrische Pulse mit einer Gaußform oder einer flat-top-Pulsform, sodass bevorzugt die zu erzeugenden Lichtpulse ebenfalls in Gaußform oder einer flat-top-Pulsform vorliegen. In weiteren Ausführungsformen können auch Doppel- oder Triple Pulse generiert werden, welche zwei oder drei Maxima in einer Pulsform aufweisen. Derartige Pulsformen können beispielsweise die Detektion von Double oder Triplet Zellen in Durchflusszytometern simulieren.

In einer bevorzugten Ausführungsform der Erfindung umfasst die vorgegebene Signalform elektrische Pulse mit einer Pulsbreite von 0,1 µs bis 100 µs, bevorzugt von 1 µs bis 10 µs und einer Wiederholungsrate von 0,1 bis 100 kHz, bevorzugt 0,5 kHz bis 40 kHz, sodass die erzeugten Lichtpulse bevorzugt gleichermaßen eine Pulsbreite von 0,1 µs bis 100 µs, bevorzugt von 1 µs bis 10 µs und eine Wiederholungsrate von 0,1 bis 100 kHz, bevorzugt 0,5 kHz bis 40 kHz aufweisen.

Die Erfahrung zeigt, dass die vorgenannten Pulsbreiten und Wiederholungsraten, insbesondere für Pulse in Gaußform oder als flat-top Pulse, sich in besonderem Maße zur Verwendung der Vorrichtung zur Charakterisierung, Standardisierung und/oder Kalibrierung von Photodetektoren in Durchflusszytometern oder Mikroskopen eignen.

Mittels der vorgenannten Komponenten ist somit eine präzise Generation einer vorgegeben Signalform elektrischer Pulse möglich. Ohne eine Feedback-Regelung kann jedoch keine 1:1 Übersetzung der elektrischen Pulsformen in Lichtpulse erfolgen. Vielmehr wird eine strombetriebene Lichtquelle, wie eine LED, stets eine verzögertes zeitlichen Verhalten gegenüber der elektrischen Ansteuerung aufweisen. Das dynamische Modulationsverhalten strombetriebener Lichtquellen, wie von LEDs, ist beispielsweise durch die Lebensdauer spontaner Emission begrenzt ist. So wird eine steile abklingende Flanke eines elektrischen Pulses nicht zu einem gleichsam steilen Abklingen der Emissionsintensität der LED führen. Vielmehr bewirkt die anhaltende spontane Emission ein verzögertes Abklingen und führt zu einer abgeflachten Pulsflanke. Ebenso ist anstiegsseitig bei Ansteuerung einer LED mit einem elektrischen Puls eine verzögerte Emissionsantwort bzw. abgeflachte Flanke zu erwarten.

Die physikalischen Emissionsprinzipen bedingen somit eine nicht-lineare Übertragungsfunktion bzw. Korrelation zwischen einem eingehenden elektrischen Puls und einem daraufhin emittierten Lichtpuls. Grundsätzlich ist es denkbar, die nicht-lineare Licht-Strom-Korrelation bei der Erzeugung der elektrischen Pulssignale zu berücksichtigen. Zum einen ist eine hierfür notwendige Kalibration aufwendig. Zum anderen führen Alterungsprozesse der Lichtquellen zu einer Veränderung der nicht-linearen Korrelation, welche nicht erfasst würde.

Stattdessen ist erfindungsgemäß eine elektronische Feedbackregelung implementiert. Zu diesem Zweck weist die Vorrichtung einen Feedback-Detektor auf, bei welchem es sich bevorzugt um einen Photodetektor handeln kann, also einem Detektor zur Quantifizierung von Licht. Das Detektionsspektrum ist bevorzugt an das Spektrum der Regel-Lichtquelle angepasst. Der Feedback-Detektor für die Messung der Regel-Lichtquelle ist nicht an eine bestimmte Art gebunden. Beispielsweise können zu diesem Zweck Photozellen, Photomulitplier (PMTs), CMOS-Sensoren, CCD-Sensoren, Photodioden, Avalanche-Photodioden oder pin-Photodioden eingesetzt werden.

In einer besonders bevorzugten Ausführungsform ist der Feedback-Detektor eine Photodiode.

Eine Photodiode ist bevorzugt eine Halbleiter-Diode, die Licht an einem p-n-Übergang oder pin-Übergang durch den inneren Photoeffekt in einen elektrischen Strom umwandelt. In Abhängigkeit des verwandten Halbleitermaterials oder dessen Dotierung kann das Detektionsspektrums der Feedback-Photodiode vorgegeben und an das Emissionsspektrum der Regel-Lichtquelle angepasst werden. Eine Photodiode als Feedback-Detektor zeichnet sich durch einen kompakten Aufbau sowie hohe Dynamik aus, um die Emission der Regel-Lichtquelle zu überwachen.

Da die Regel- und Emissions-Lichtquelle in Reihe geschaltet vorliegen, werden diese mittels des identischen elektrischen Signals zur Emission angeregt. Erfindungsgemäß wurde erkannt, dass insbesondere bei baugleichen Paaren von Regel- und Emissionslichtquellen sich die Emissionsdynamiken in überraschend hohem Maße gleichen. Das durch den Feedback-Detektor bereitgestellte elektrische Feedback-Signal lässt somit unmittelbar und mit hoher Genauigkeit Rückschlüsse auf das Emissionsverhalten der Emissions-Lichtquelle zu. Die Positionierung eines Detektors in der Nähe der Emissions-Lichtquelle ist nicht notwendig.

Zur Nachregelung des elektrischen Signals anhand des von dem Feedback-Detektor gemessen Emissionsverhalten umfasst die Vorrichtung eine Regeleinheit.

Bevorzugt wird die Regeleinheit durch eine elektrische Schaltung gebildet, welche ein Soll- und Feedback-Signal vergleicht und den Strom durch Regel- und Emissionsquellen derart reguliert, dass die Differenz beider Signale gleich Null ist. Das Sollsignal entspricht bevorzugt dem vom Funktionsgenerator bereitgestellten elektrischen Signal, welches die Emissions- und Regel-Lichtquellen speist. Die Einspeisung erfolgt nicht unmittelbar.

Stattdessen wird das vom Funktionsgenerator erzeugte elektrische Signal an eine Regeleinheit angeschlossen, welche zudem einen Eingang für das Signal des Feedback-Detektors aufweist. Die Regeleinheit ist derart konfiguriert, dass das aus der Regeleinheit ausgehende elektrische Signal so modifiziert wird, dass die Differenz zwischen dem vom Funktionsgenerator eingehenden Sollsignal und dem vom Feedback-Detektor gemessenen Feedback-Signal Null ist. Das Emissionsverhalten der Regel-Lichtquelle ist wie obig erläutert identisch oder nahezu identisch zum Emissionsverhalten der Emissions-Lichtquelle. Die Regelung führt somit ebenso das "Ist-Signal" der Emissions-Lichtquelle nahezu perfekt an das Soll-Signal des Funktionsgenerators nach. Die von der Emissions-Lichtquelle emittierten Lichtpulse entsprechen in Bezug auf Pulsform und zeitlichen Verlauf bevorzugt nahezu exakt den vom Funktionsgenerator bereitgestellten elektrischen Pulsen. Durch die Steuerung der Stromzufuhr zu den Lichtquellen mittels der Feedback-Regelung wird somit bevorzugt eine enge Korrelation des zeitlichen Intensitätsverlauf der ausgehenden Lichtpulse mit der vorgegebenen Signalform gewährleistet.

Die erfindungsgemäße Feedback-Regelung erlaubt ein besonders präzises zeitliches Nachführen der Lichtpulse der Emissions-Lichtquellen an das gewünschte Soll-Signal. In dieser Hinsicht geht die dynamische Feedback-Regulation deutlich über eine einfache Anpassung der Helligkeit von LEDs auf Basis eines Feedback-Detektors hinaus, welche beispielsweise in der US 2009/057534 A1 oder EP 2 464 200 A1 vorgeschlagen wird und keine Regelung einer Pulsform vorsieht.

In einer bevorzugten Ausführungsform erfolgt die Feedback-Regelung zeitlich kontinuierlich sowohl während der Erzeugung der Lichtpulse als in Dunkelphasen zwischen den Pulsen. Um ein präzises Arbeiten der Feedback-Regelung während der Dunkelphasen zu gewährleisten, ist es bevorzugt, dass die Regel-Lichtquelle auch während der Dunkelphase eine minimale Menge an Licht erzeugt, welche einem endlichen positiven Offset entspricht. Das heißt bevorzugt, dass zwischen den Pulsen im "AUS"-Zustand die Regel-Lichtquelle schwach glimmt. Durch das kontinuierliche Arbeiten des Regelkreises während der Dunkelphasen kann vorteilhaft gewährleistet werden, dass zu Beginn eines neuen Lichtpulses die Regelung kein Überschwingen zeigt. Dadurch wird ein sehr präziser und glatter Regelbetrieb gewährleistet.

In einer bevorzugten Ausführungsform wird die mindestens eine Emissions-Lichtquelle über einen separaten Schalter in Dunkelphasen von der Feedback-Regelung abgekoppelt, sodass die Emissions-Lichtquelle bevorzugt einen echten Dunkelzustand bzgl. des emittierten Lichtes zwischen den Lichtpulsen erreicht. In der Ausführungsform erfolgt die Feedback-Regelung in den Dunkelphasen bevorzugt mittels einer schwach glimmenden Regel-Lichtquelle kontinuierlich, sodass das "Ist"-Signal für die Lichtquellen weiterhin an das Soll-Signal des Funktionsgenerators (minimaler endlicher Offset) nachgeführt wird. Das nachgeführte Signal wird jedoch nicht in ein schwach glimmendes Signal der Emissions-Lichtquelle während der Dunkelphase überführt. Stattdessen wird die Stromzufuhr der Emissions-Lichtquelle über einen separaten Schalter von dem Regelkreis während der Dunkelphase vom Regelkreis abgekoppelt. Damit wird ein echter "Dunkelzustand" bzgl. des emittierten Lichts zwischen den Pulsen erreicht, ohne dass der Regelkreis zu Beginn des nächsten Pulses ein Überschwingen zeigt. Kurz vor Beginn eines nächsten Lichtpulses wird die Emissions-Lichtquelle wieder dazu geschaltet. Bevorzugt läuft die Emissions-Lichtquelle dementsprechend ebenfalls mit dem minimalen Offset.

Vorteilhaft hat sich gezeigt, dass die Störung der Regelung durch das Zu- und Abschalten der Emissions-Lichtquelle vom Regelkreis minimal ist. Insbesondere wird hierdurch ein echter Dunkelzustand erreicht, ohne dass die Feedback-Emissionsquelle zwischen den Pulsen echt ausgeschaltet werden muss. Ein Abbrechen des Regelsignals und Übergang der Feedback-Regelung in einen undefinierten Zustand wird verhindert. Resultierend kann eine besonders störungsfreie und genaue Regelung erreicht werden.

In einer bevorzugten Ausführungsform der Erfindung ist die Regeleinheit für eine Nachregelung des elektrischen Signals mit einer Frequenz von mehr als 10 MHz, bevorzugt mehr als 50 MHz, 100 MHz konfiguriert ist. Wie für elektrische Feedback-Mechanismen üblich kann die beschriebene Regelung des elektrischen Signals mittels der Regeleinheit vorteilhafterweise im Nanosekundenbereich erfolgen, sodass für Pulse mit bevorzugten Pulsbreiten im Bereich einiger Mikrosekunden eine Nachregelung mit um Größenordnungen höherer Auflösung erfolgt.

In einer weiteren bevorzugten Ausführungsform der Erfindung wird das elektrische Signal des Feedback-Detektors vor Einspeisung in die Regeleinheit verstärkt. In bevorzugten Ausführungsformen kann hierzu ein Transimpedanz-Verstärker verwandt werden. Durch Verstärkung des Feedback-Signals wird eine höhere Genauigkeit der Regulation erzielt.

In einer weiteren bevorzugten Ausführungsform der Erfindung umfasst die Vorrichtung für jede der mindestens einen Emissions-Lichtquelle eine Regel-Lichtquelle mit im Wesentlichen identischen Leistungsparametern, bevorzugt in Bezug auf das Emissionsspektrum, die Beleuchtungsstärke und/oder die Licht-Strom-Charakteristik. Leistungsparameter bezeichnen bevorzugt jegliche Parameter der Lichtquellen, welche deren Emissionsverhalten charakterisieren können.

Um sicherzustellen, dass das Emissionsverhalten der Regel-Lichtquelle besonders präzise jenes der Emissions-Lichtquelle reflektiert, ist es bevorzugt bauartgleiche Lichtquellen zu verwenden.

Bevorzugt sollten alle Leistungsparameter bzw. Charakteristika der Regel- bzw. Emissions-Lichtquelle, die zur Charakterisierung, Kalibrierung und/oder Standardisierung verwendet werden identisch sein. Insbesondere sollte das zeitliche Verhalten bzgl. einer Stromänderung, also die dynamische Licht-Strom-Charakteristik der jeweiligen Regel- und Emissions-Lichtquelle identisch oder nahezu identisch sein. Falls auch das Emissionsspektrum des Lichtes bei der Kalibrierung der Photodetektoren zum Tragen kommt, ist es besonders bevorzugt, dass auch das Emissionsspektrum der Regel- und Emissions-Lichtquellen soweit identisch oder nahezu identisch ist, dass ein Fehler, der durch Unterschiede im Emissionsspektrum entstehen könnte, um mindestens eine Größenordnung geringer ist, als die angestrebte Genauigkeit der Kalibrierung.

Bereits bekannt ist, dass bei sehr geringen und bei sehr hohen Strömen LEDs als Lichtquellen deutlich messbare Unterschiede der integrierten Lichtintensität aufweisen. So lange das zeitliche (und spektrale) Verhalten von Regel- und Emissions-LEDs aber weitgehend identisch ist, lässt sich dieser Unterschied beispielsweise leicht durch entsprechende Anpassung des Soll-Helligkeitswertes korrigieren.

Begriffe wie im nahezu, im Wesentlichen, ungefähr, etwa, ca. etc. beschreiben bevorzugt einen Toleranzbereich von weniger als ± 20%, bevorzugt weniger als ± 10 %, noch stärker bevorzugt weniger als ± 5% und insbesondere weniger als ± 1%. Angaben von im Wesentlichen, ungefähr, etwa, ca. etc. offenbaren und umfassen stets auch den exakten genannten Wert Die Erfahrung der Erfinder zeigt, dass bauartgleiche Lichtquellen, beispielsweise LEDs, einer Charge hinsichtlich ihres zeitlichen Verhaltens einen überaus hohen Grad an Identität aufweisen. Durch Stichproben oder die Messung der Sprungantwort einer LED bzw. Lichtquelle kann das Vorliegen identischer Leistungsparameter insbesondere in Bezug auf die dynamische Licht-Strom-Charakteristik sichergestellt werden.

So kann beispielsweise die Messung der emittierten Lichtmenge als Funktion des Stroms durch potentiell zu verwendende Regel/Emissions-Lichtquellen erfolgen. Durch Vergleich der erhaltenen Kurven ergibt sich die erwähnte Korrektur des Soll-Signals dergestalt, dass die emittierte Lichtmenge der vom Benutzer eingestellten Helligkeit entspricht.

Auch die spektralen Eigenschaften der Lichtquellen, bevorzugt der LEDs, lassen auf einfache Weise mit einem Spektrometer vermessen, so dass auf deren Basis ein Auswahlverfahren für die zu verwendenden Lichtquellen bei der Herstellung implementiert werden kann. Beispielsweise kann vor der Fertigung eine Auswahl je paarig spektral kompatibler LEDs erfolgen sowie ein Test gefertigter LED-Module, wobei spektral inkompatible Modulen, aussortiert werden.

In einer bevorzugten Ausführungsform der Erfindung weist die Vorrichtung zwei oder mehr Emissions-Lichtquellen auf, wobei die Vorrichtung derart konfiguriert ist, dass die zwei oder mehr Emissions-Lichtquellen mit einer unterschiedlichen Effizienz in den Lichtleiter einkoppeln, sodass in Abhängigkeit der Ansteuerung der zwei oder mehr Emissions-Lichtquellen unterschiedliche Intensitätsbereiche für die ausgekoppelten Lichtpulse wählbar sind.

Zu diesem Zweck können unterschiedliche Konfigurationen vorgesehen sein. Beispielsweise kann es bevorzugt sein, dass die Emissions-Lichtquellen in einem unterschiedlichen Abstand und/oder Orientierung zum Lichtleiter vorliegen. Weiter beabstandete Emissions-Lichtquellen oder Emissions-Lichtquellen, welche nicht senkrecht auf den Lichtleiter strahlen, werden mit einer geringeren Effizienz einkoppeln, als dies für nahe Emissions-Lichtquellen der Fall ist, insbesondere wenn diese zudem senkrecht auf den Lichtleiter strahlen. Die Positionierung sowohl im Hinblick auf den Abstand und/oder die Orientierung stellt eine besonders einfache Möglichkeit dar, um eine unterschiedliche Effizienz der Einkopplung zu gewährleisten.

Es können aber auch andere Prinzipien zum Tragen kommen. Beispielsweise kann es bevorzugt sein, dass optische Filter (beispielsweise Neutraldichte-Filter, ND-Filter) oder eine Blende zur teilweise räumlichen Filterung des emittierten Lichtes der jeweiligen Lichtquellen verwandet werden.

Durch Bereitstellung von zwei oder mehr Emissions-Lichtquellen, bevorzugt drei oder mehr Emissions-Lichtquellen, welche mit einer unterschiedlichen Effizienz in den Lichtleiter einkoppeln und separat ansteuerbar sind, kann eine besonders hohe Intensitätsdynamik erreicht werden.

Die Dynamik einer einzelnen Lichtquelle, beispielsweise einer LED, wird in der Regel durch ein Grundrauschen limitiert, wodurch nicht beliebig kleine Emissionsintensitäten erreichbar sind. Stattdessen ist für eine sinnvolle Generation der Lichtpulse eine Mindestintensität erforderlich. Die Dynamik einer LED liegt typischerweise in einem Bereich zwischen 1:500 bzw. 1:100, d.h. mittels entsprechender Variation der Stromstärke des eingehenden elektrischen Signals kann die Amplitude der Lichtemission maximal um einen Faktor 500 bzw. in einigen Fällen nur 100 variiert werden.

Für die Einkopplungseffizienz kann hingegen auf einfache Weise beliebige Dämpfungsfaktoren eingeführt werden. Beispielsweise kann die Einkopplungseffizienz für eine erste Emissions-Lichtquelle um einen Faktor 100 höher sein, als die Einkopplungseffizienz für eine zweite Emissions-Lichtquelle. Konnten beide separate lediglich einen Amplitudenmodulation in einem Bereich von 1:100 abdecken, beträgt der dynamische Bereich für das System der separat ansteuerbaren Lichtquellen 1:10 000. Dementsprechend kann die zweite Emissions-Lichtquelle einen niedrigen Intensitätsbereich und die Erste einen um den Faktor 100 höheren Intensitäts- bzw. Amplitudenbereich abdecken.

In einer bevorzugten Ausführungsform der Erfindung unterscheidet sich die Effizienz des Einkoppelns der zwei oder mehr Emissions-Lichtquellen in die Lichtfaser um mindestens einen Faktor 1:10, bevorzugt 1:50, 1:100 oder mehr.

Im Falle von drei oder mehr Emissions-Lichtquellen kann es bevorzugt sein, eine Reihe von drei oder mehr Emissions-Lichtquellen für verschiedene Intensitätsbereiche bereitzustellen, wobei der nächst höher liegende Intensitätsbereich stets auf einer um denselben Faktor erhöhten Effizienz des Einkoppelns basiert. Der vorgenannte Faktor entspricht bevorzugt dem Verhältnis der Intensität oder Amplitude der in den Lichtleiter eingekoppelten Lichtpulse.

In einer bevorzugten Ausführungsform der Erfindung ist Vorrichtung dadurch gekennzeichnet, dass die Vorrichtung zwei oder mehr, bevorzugt drei, vier, fünf, sechs oder mehr, Emissions-Lichtquellen sowie zugeordnete zwei oder mehr, bevorzugt drei, vier, fünf, sechs oder mehr, Regel-Lichtquellen mit unterschiedlichen spektralen Emissionsbereichen umfasst. Durch Bereitstellung derartiger Zuordnungspaare von Regel- und Emissions-Lichtquellen kann auf kompakte Weise ein breiter spektraler Bereich mittels der Lichtquellen abgedeckt werden. Da im Gegensatz zu bisherigen Lösungen im Stand der Technik, keine direkte Feedback-Detektion der Emissions-Lichtquellen erfolgen muss, können besonders kompakte Anordnungen realisiert werden.

In einer bevorzugten Ausführungsform der Erfindung ist die Vorrichtung dadurch gekennzeichnet, dass die zwei oder mehr, bevorzugt drei, vier, fünf, sechs oder mehr, Emissions-Lichtquellen einen spektralen Bereich einer Breite von mindestens 400 nm, bevorzugt 500 nm, 600 nm oder mehr abdecken, wobei der spektrale Bereich bevorzugt innerhalb eines Intervalls von 200 nm bis 1500 nm, bevorzugt 300 nm bis 1200 nm, 400 nm bis 900 nm, liegt.

In einer bevorzugten Ausführungsform der Erfindung weist die Vorrichtung zwei oder mehr, bevorzugt drei, vier, fünf, sechs oder mehr, Emissions-Lichtquellen auf, welche auf einer Platine installiert vorliegen, wobei die zwei oder mehr, bevorzugt drei, vier, fünf, sechs oder mehr, Emissions-Lichtquellen bevorzugt ringförmig oder kreisförmig auf der Platine angeordnet sind. Besonders bevorzugt weisen die ringförmig oder kreisförmig angeordneten Emissions-Lichtquellen unterschiedliche spektrale Emissions-Bereiche auf, um beispielsweise einen spektralen Bereich einer Breite von mindestens 400 nm, 500 nm, 600 nm oder mehr abzudecken.

Bevorzugt werden die zwei oder mehr, bevorzugt drei, vier, fünf, sechs oder mehr, Emissions-Lichtquellen kreisförmig um eine Achse angeordnet auf welche sich der Lichtleiter befindet, sodass die Emissions-Lichtquellen einen gleichen Abstand und/oder Orientierung zum Lichtleiter haben und somit mit bevorzugt gleicher Effizienz in selbigen einkoppeln.

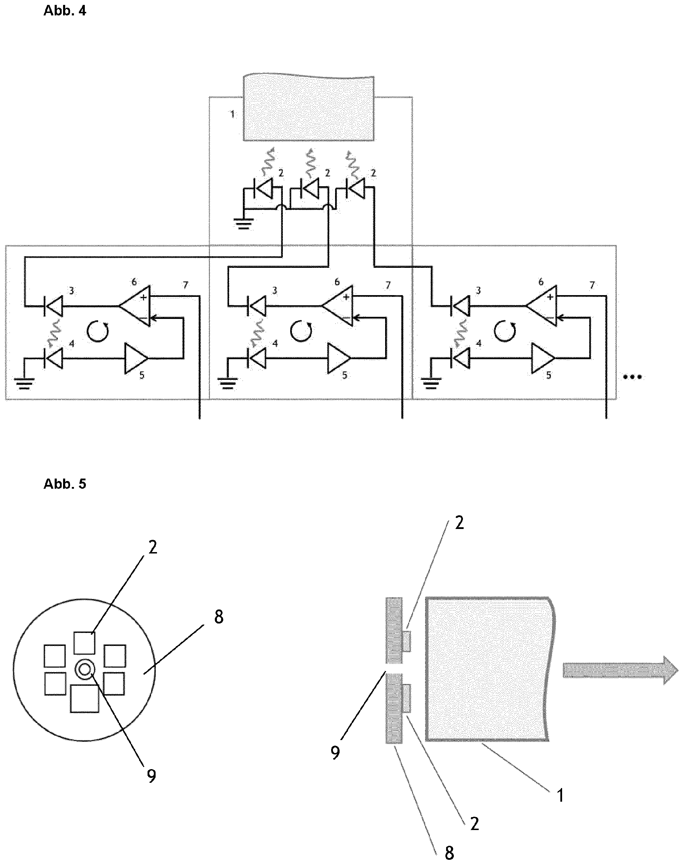

Mit der Konstruktionsform ist zudem eine besonders enge Integration der Lichtquellen auf der Platine möglich. So ist es beispielsweise möglich die sechs LEDs auf einem Ring oder Kreis mit einem Durchmesser von weniger als 2 mm zu positionieren. Für LEDs mit typischen Abmaßen von 0.5 mm, können diese auf einem derartigen Ring besonders eng mit Abständen von weniger als 0,1 mm positioniert werden. Hierdurch wird die Erzeugung von Lichtpulsen mit 6 Farben durch äußerst kompakte Bauweise realisiert (vgl. auch Fig. 5). Zudem kann es bevorzugt sein, eine Emissionslichtquelle in der Mitte eines Kreises zu positionieren. Beispielsweise ließen sich mögliche Helligkeitsunterschiede verschieden farbige LEDs ausgleichen indem bewusst die dunkelste Farbe bzw. die LED mit der geringsten Intensität an eine Position mit der besten Einkopplungseffizienz in der Mitte des Kreises gesetzt wird.

In einer bevorzugten Ausführungsform der Erfindung weist die Vorrichtung zwei oder mehr, bevorzugt drei, vier, fünf, sechs oder mehr, Emissions-Lichtquellen und eine gleiche Anzahl von Regel-Lichtquellen sowie Feedback-Detektoren auf, wobei jeder Emissions-Lichtquelle eine Regel-Lichtquelle zugeordnet ist. Die zugeordneten Emissions- und Regel-Lichtquellen liegen bevorzugt als bauartgleiche Lichtquellen vor, beispielweise als LEDs mit identischen Betriebsparametern. Werden beispielsweise zwei oder mehr, bevorzugt drei, vier, fünf, sechs oder mehr, Emissions-Lichtquellen mit unterschiedlichem spektralem Emissions-Bereich eingesetzt, ist es bevorzugt, dass der spektrale Emissionsbereich der jeweiligen Regel-Lichtquelle dem spektralen Emissionsbereich der zugeordneten Emissions-Lichtquelle entspricht.

Vorteilhafterweise kann die räumliche Anordnung der Regel-Lichtquellen unabhängig von der Anordnung der Emissions-Lichtquellen gewählt werden. So können die Regel-Lichtquellen beispielsweise auf derselben oder einer anderen Platine installiert werden. Auch die Feedback-Detektoren können räumlich flexibel angeordnet werden, wobei in Bezug auf die jeweilige Regel-Lichtquelle eine Positionierung zur optimalen Ausleuchtung bevorzugt ist. Die räumliche Trennung von Emissions- und Regel-Lichtquellen führt somit zu einer erhöhten konstruktiven Flexibilität, welche insbesondere bei einer Bereitstellung mehrere Emissions-Lichtquellen eine hoch effiziente Feedback-Steuerung mit einem überaus kompakten Aufbau verbindet.

In einer weiteren bevorzugten Ausführungsform der Erfindung weist die Vorrichtung zwei oder mehr Emissionsgruppen von zwei oder mehr, bevorzugt drei, vier, fünf, sechs oder mehr, Emissions-Lichtquellen mit unterschiedlichen spektralem Emissionsbereich auf, wobei die zwei oder mehr Emissionsgruppen derart positioniert vorliegen, dass diese mit unterschiedlicher Effizienz in die Lichtfaser einkoppeln. In der Ausführungsform können somit Lichtpulse mit verschiedenem spektralem Bereich für verschiedene Intensitätsstufen erzeugt werden. Die Ausführungsform zeichnet sich mithin nicht nur durch eine hohe Dynamik aus, sondern ist ebenfalls durch die Möglichkeit der Ansteuerung eines breiten spektralen Bereiches mittels der Lichtquellen gekennzeichnet.

In einer bevorzugten Ausführungsform der Erfindung liegen zwei oder mehr Emissionsgruppen auf Platinen angeordnet vor, welche entlang der Emissionsrichtung hintereinander positioniert sind und jeweils eine Apertur für einen Lichtdurchlass in Emissionsrichtung einer dahinterliegenden Emissionsgruppen aufweisen, sodass die Einkopplung einer vorderen Emissionsgruppe durch die teilweisen Abschirmung einer dahinterliegender Platine vermindert wird.

Bei den Emissionsgruppen handelt es sich bevorzugt, wie obig erläutert, um eine Gruppe von zwei, drei, vier, fünf, sechs oder mehr, Emissions-Lichtquellen mit unterschiedlichem spektralem Emissionsbereich, welche besonders bevorzugt kreisförmig auf einer Platine angeordnet vorliegen. Durch die Positionierung der Emissionsgruppen hintereinander und der Ausnutzung der teilweisen Abschirmung davorliegender Platinen, können die jeweiligen Emissionsgruppen für unterschiedliche Intensitätsbereiche genutzt werden. Um die Effizienz der Einkopplung für die unterschiedliche Emissionsgruppen zu variieren, weist jede Platine bevorzugt eine Apertur, d.h. eine Öffnung auf. Die Größe der Öffnung legt fest, mit welcher Effizienz eine eingangsseitig vor der Platine positionierte Emissions-Lichtquelle in den ausgangsseitigen Lichtleiter einkoppelt.

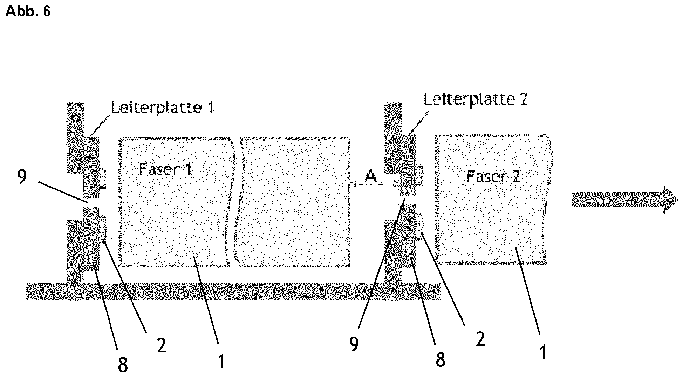

In einer bevorzugten Ausführung können die Emissionsgruppen kreisförmig auf Platinen mit zentralaxialen Aperturen angeordnet vorliegen, wobei eine optische Faser eine Lichtleitung von einer eingangsseitigen Emissionsgruppe zur nächst ausgangsseitigen Emissionsgruppe erlaubt (vgl. Fig. 6). Ausgangsseitig meint bevorzugt jene Seite der Vorrichtung, an welcher der Lichtleiter zur Weiterleitung der Lichtpulse an ein Durchflusszytometer oder Mikroskop vorliegt. Eingangsseitig bezeichnet die entgegengesetzte Richtung. In Emissionsrichtung vordere Emissionsgruppen können auch als eingangsseitige Emissionsgruppen bezeichnet werden. Emissionsgruppen, welche in Nähe des Lichtleiters zur Auskopplung vorliegen, werden auch als dahinterliegende oder ausgangsseitige Emissionsgruppen bezeichnet.

Die Effizienz der Einkopplung kann von der Größe der Apertur oder des Faserabstand der verbindenden optischen Fasern zum auskoppelnden Lichtleiter abhängen.

In einer bevorzugten Ausführungsform der Erfindung unterscheidet sich die Effizienz der Einkopplung der zwei oder mehr Emissionsgruppen in die Lichtfaser um mindestens einen Faktor 1:10, bevorzugt 1:50, 1:100. Im Falle der obig beschriebenen auf Platinen mit Aperturen kreisförmig angeordneten Emissionsgruppen, welche hintereinander geschaltet vorliegen, kann ein Fachmann entsprechende Faktoren durch Anpassung des Durchmessers der Apertur oder aber des Abstand der auf die Apertur zuführenden optischen Fasern gewährleisten.

In einem weiteren Aspekt betrifft die Erfindung auch die Verwendung einer beschriebenen Vorrichtung zur Charakterisierung, Standardisierung und/oder Kalibrierung von Photodetektoren, bevorzugt innerhalb eines Durchflusszytometers und/oder eines Mikroskops.

Im Sinne der Erfindung hat der verwandte Begriff Photodetektor bevorzugt die auf dem Fachgebiet übliche Bedeutung und bezeichnet Sensoren zur Quantifizierung von elektromagnetischer Strahlung, bevorzugt im sichtbaren Bereich, wobei auch eine Detektion von elektromagnetischer Strahlung im Ultravioletten oder Infrarotbereich bevorzugt sein kann. Unter den Begriff der Photodetektoren können sowohl Detektoren fallen, deren Funktionsweise auf dem äußeren photoelektrischen Effekt basiert, wie beispielsweise Photozellen oder Photomulitplier (PMTs). Ebenso können auch Photodetektoren, die den inneren photoelektrischen Effekt benutzen, mittels der Vorrichtung charakterisiert oder kalibriert werden. Hierzu zählen beispielsweise CMOS-Sensoren, CCD-Sensoren, Photodioden Avalanche-Photodioden, pin-Photodiode oder Fototransistoren.

Wie eingangs erläutert, eignet sich die Vorrichtung jedoch in besonderem Maße zur Charakterisierung, Standardisierung und/oder Kalibrierung von Photomulitpliern (PMTs), wobei die präzise Generation der Lichtpulse es ermöglicht, auf Basis statischer Gesetzmäßigkeiten (vgl. Steen 1992) eine umfassende Charakterisierung des dynamische Erfassungsbereiches (engl. *dynamic ränge,* DNR) und des Signal-Rausch-Verhältnis (engl. *signal-to-noise ratio,* SNR),

Das Signal-Rausch-Verhältnis (SNR) stellt bevorzugt ein Maß dar, das den Pegel eines gewünschten Signals mit dem Pegel eines Hintergrundsignals vergleicht. Zur Bestimmung des SNR ist daher bevorzugt ebenso eine Charakterisierung des Dunkelrauschens vorgesehen. Der dynamische Erfassungsbereich (DNR), stellt bevorzugt ein Maß dar, das die Pegel des minimal erfassbaren Signals und des maximal erfassbaren Signals miteinander vergleicht.

Durch Bestimmung der Abhängigkeit des SNR und DNR von einer Detektorspannung, beispielsweise einem PMT-Gain, kann vorteilhafterweise ein optimaler Arbeitsbereich eingestellt werden (vgl. Gieseke et al. Cytometry Part A 91A: 1104-1114, 2017). Hierzu können beispielsweise anhand SNR- und DNR-Kurven über einen PMT-Spannungsbereich von 400 V bis 1.000 V erzeugt und ausgewertet werden. In der Regel wird bei einer Erhöhung des PMT-Gains zunächst das SNR wachsen, während der DNR konstant bleibt. Bei weiteren Steigerungen kommt es ab einem Grenzwert (DNR) für den PMT-Gain es zu einem Abfall des DNR. Ebenso steigt die SNR nicht kontinuierlich, sondern erreicht ab einem Grenzwert (SNR) ein Plateau. Der optimale Arbeitsbereich wird zwischen den beiden Grenzwerten liegen. Unterhalb des Arbeitsbereiches ist das SNR suboptimal. Oberhalb des Arbeitsbereiches stagniert das SNR im Maximum, wobei eine Erhöhung des PMT-Gains lediglich zu einem Abfall des DNR führt.

Weiterhin erlaubt die präzise Generation der Lichtpulse mittels der Vorrichtung u.a. eine Kalibrierung der Intensitätsskalen von Photodetektoren zur Ermittlung absoluten Einheiten (vgl. Steen et al. 1992 und oben). Im Falle fluoreszenter Proteine können durch Kenntnis absoluter Einheiten Rückschlüsse auf die tatsächliche Konzentration von Proteinen gezogen werden. Zudem erlaubt eine absolute Intensitätskalibration einen aussagekräftigen quantitativen Vergleich experimenteller Daten, welche mit verschiedenen Geräten aufgenommen wurden. Beispielsweise kann es bevorzugt sein mittels eines Durchflusszytometers fluoreszente Zellen zu sortieren und diese im Anschluss in einem Mikroskop zu untersuchen. Im Durchflusszytometer und Mikroskop werden unterschiedliche Photodetektoren eingesetzt, deren Signale nicht ohne Weiteres vergleichbar sind. Eine Kalibration zur Ermittlung absoluter Einheiten ermöglicht hingegen eine Zuordnung der Zellen im Mikroskop zu Daten des Durchflusszytomers und umgekehrt.

In einer bevorzugten Ausführungsform betrifft die Erfindung zudem eine Verwendung für eine Kalibrierung der Intensitätsskalen der Photodetektoren zur Ermittlung absoluten Einheiten, einer Charakterisierung der Photodetektoren, beispielsweise im Hinblick auf deren Dunkelrauschen, *signal-to-noise ratio* (SNR) oder *dynamic range* (DNR) und/oder zur Optimierung der Betriebsparameter der Photodetektoren, beispielsweise der Spannungs- bzw. Verstärkereinstellung im Falle eines Photomultiplier (PMT).

Photodetektoren, insbesondere auch PMTs, werden standardmäßig in Durchflusszytometern wie auch optischen Mikroskopen eingesetzt und zeichnen sich durch eine besonders hohe Sensitivität aus, welche auch geringe Signale zuverlässig und schnell detektieren.

Die Charakterisierung, Standardisierung und/oder Kalibrierung von Photodetektoren ist somit von besonderer Bedeutung für eine Kontrolle und Verbesserung der Performance von Durchflusszytometern oder Mikroskopen.

In einem weiteren Aspekt betrifft die Erfindung daher auch ein System umfassend
a. ein Durchflusszytometer oder Mikroskop und
b. eine beschriebene Vorrichtung zur Erzeugung von Lichtpulsen für die Charakterisierung, Standardisierung und/oder Kalibrierung des Durchflusszytometers oder Mikroskopes

Durchflusszytometer bezeichnet die im Stand der Technik üblicherweise verwendeten Instrumente zur Durchführung einer Durchflusszytometriemessung. Typischerweise umfasst ein Durchflusszytometer ein Reservoir für ein Fluid und Partikel, eine Fluiddüse, die konfiguriert ist, um einen Fluidstrom zu erzeugen, der die Partikel umfasst, eine Lichtquelle, die konfiguriert ist, um einen Lichtstrahl zu erzeugen, der den die Partikel umfassenden Fluidstrom beleuchtet, einen Photodetektor, bevorzugt einen PMT, der konfiguriert ist, um das abgestrahlte Licht der Partikel zu erfassen, und ggf. eine Verarbeitungseinheit zur Auswertung des detektierten Lichtes.

In einem weiteren Aspekt betrifft die Erfindung zudem einen Kit umfassend
a. eine beschriebene Vorrichtung
b. ein Computerprogramm konfiguriert für die Durchführung eines Verfahrens zur Charakterisierung, Standardisierung und/oder Kalibrierung eines Durchflusszytometers oder Mikroskops mittels der Vorrichtung
c. Optional Instruktionen und/oder Mittel zum Anschluss der Vorrichtung an ein Durchflusszytometer oder Mikroskop.

Der Fachmann erkennt, dass bevorzugte Ausführungsformen und Vorteile, welche im Zusammenhang mit der Vorrichtung zur Erzeugung von Lichtpulsen zur Charakterisierung, Standardisierung und/oder Kalibrierung von Photodetektoren offenbart wurden, sich gleichermaßen auf die beanspruchte Verwendung bzw. das System und den Kit übertragen. Insbesondere gelten die bevorzugten Ausführungsformen für die Vorrichtung gleichermaßen deren Verwendung, das System sowie den Kit.

### Detaillierte Beschreibung

Im Folgenden soll die Erfindung an Hand von Beispielen und Figuren näher erläutert werden, ohne auf diese beschränkt zu sein.

### Kurzbeschreibung der Abbildungen

**Abbildung 1** zeigt ein Blockschaltbild einzelner Komponenten der Vorrichtung zur Erzeugung von Lichtpulsen.

**Abbildung 2** zeigt eine schematische Illustration der Implementation einer Feedback-Regelung gemäß des Standes der Technik.

**Abbildung 3** zeigt eine schematische Illustration einer bevorzugten Ausführungsform einer Feedback-Regelung gemäß der Erfindung.

**Abbildung 4** zeigt eine schematische Illustration einer bevorzugten Ausführungsform der Vorrichtung zur Bereitstellung von Lichtpulsen mit unterschiedlicher spektraler Emission.

**Abbildung 5** zeigt eine schematische Darstellung einer bevorzugten Platine, auf welcher Emissions-Lichtquellen kreisförmig angeordnet sind (A: Draufsicht; B: Seitenansicht).

**Abbildung 6** illustriert schematisch eine Anordnung von mehreren Emissionsgruppen mit mehrfarbigen Lichtquellen, welche unterschiedliche Intensitätsstufen repräsentieren.

### Detaillierte Beschreibung der Abbildung

Abbildung 1 zeigt ein Blockschaltbild einzelner Komponenten der Vorrichtung zur Erzeugung von Lichtpulsen. Ein Mikroprozessor dient der Weiterverarbeitung eines User Inputs hinsichtlich einer gewünschten Lichtpulsform. Die ermittelten Information bzw. Vorgaben zu der Signalform werden an einen Arbiträr-Funktionsgenerator weitergeleitet, welche ein elektrisches Signal mit entsprechender Signalform generiert. Das elektrische Signal wird an eine sogenannte Analog-To-Light Einheit weitergegeben, welche das elektrische Signal in Lichtpulse wandelt.

Abbildung 2 zeigt eine schematische Illustration der Implementation einer Feedback-Regelung gemäß des Standes der Technik, beispielweise des bekannten quantiFlash Kalibrierproduktes.

Wie in Abb. 2A zu sehen ist, wird ein elektrisches Signal gemäß der vorgegebene Signalform (Sollsignal 7) vom Funktionsgenerator an den Analog-to-Light Converter übergeben. Das elektrische Signal durchfließt die Emissions-Lichtquelle **2** und führt zur Erzeugung von Lichtpulsen. Ein Feedback-Detektor **4** ist so positioniert, dass dieser das durch die Emissions-Lichtquelle **2** emittierte Licht erfasst. Das elektrische Feedback-Signal wird mittels eines Transimpedanz-Verstärkers **5** verstärkt und an eine Regeleinheit **6** übergeben. Die Regeleinheit **6** wird durch eine elektrische Schaltung gebildet, welche das Sollsignal **7** mit dem Feedback-Signal vom Feedback-Detektor **4** vergleicht und den Strom durch die Emissionsquellen derart reguliert ist, dass die Differenz beider Signale gleich Null ist. Hierdurch wird Ist-Signal der Emissions-Lichtquelle **2** an das Soll-Signal **7** des Funktionsgenerators nachgeregelt bzw. angepasst.

Abb. 2B zeigt illustriert eine Anordnung der Emissions-Lichtquelle **2** zur Abdeckung eines breiten Intensitätsbereiches und erhöhter Dynamik. Zu diesem Zweck werden drei Emissions-Lichtquellen **2** bereitgestellt, welche anhand ihrer relativen Positionierung zur Ausgangsfaser bzw. zum Lichtleiter **1** mit unterschiedlicher Effektivität in selbigen einkoppeln. Die obere Emissions-Lichtquelle **2,** welche nahe an dem Lichtleiter **1** vorliegt, wird mit der höchsten Effektivität in den Lichtleiter **1** einkoppeln und kann einen Bereich hoher Pulsintensitäten abdecken. Dem gegenüber koppelt die Emissions-Lichtquelle **2,** welche entfernter von dem Lichtleiter **1** positioniert ist, nur mit verminderter Effektivität in selbigen ein, sodass diese einer geringeren Intensitätsstufe entspricht. Die Positionierung der Emissions-Lichtquellen **2** mit unterschiedlichem Abstand zum Lichtleiter **1** erlauben mithin die Einstellung unterschiedlicher Intensitätsstufen. Der Feedback-Detektor **4** ist derart positioniert, dass Licht jeder der drei Emissions-Lichtquellen **2** zumindest teilweise auf den Feedback-Detektor **4** strahlt.

Die Ausleuchtung des Feedback-Detektors **4** durch die verschiedenen Emissions-Lichtquellen **2** variiert jedoch, sodass diese nicht für alle Emissions-Lichtquellen **2** optimal sein kann und zudem eine individuelle Anpassung der Feedback-Regulation notwendig ist.

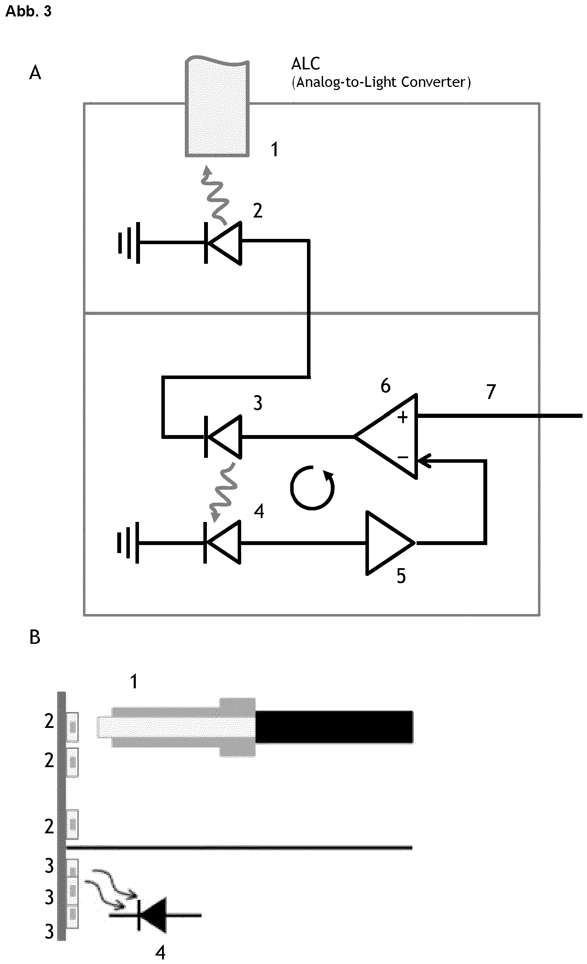

**Figur 3** zeigt eine schematische Illustration einer bevorzugten Ausführungsform einer Feedback-Regelung gemäß der Erfindung.

Das Grundprinzip ähnelt der in Fig. 2A gezeigten Feedback-Regulation. Ein elektrisches Signal gemäß der vorgegebene Signalform (Sollsignal **7**) wird vom Funktionsgenerator an den Analog-to-Light Converter übergeben, durchfließt die Emissions-Lichtquelle **2** zur Erzeugung von Lichtpulsen und wird anhand eines Feedback-Detektors **4** nachgeregelt. Abweichend detektiert der Feedback-Detektor **4** jedoch nicht unmittelbar die Lichtpulse der Emissions-Lichtquelle **2.** Stattdessen umfasst die Vorrichtung eine separate Regel-Lichtquelle **3.** Emissions-Lichtquelle **2** und Regel-Lichtquelle **3** liegen in Reihenschaltung vor, sodass beide durch dasselbe elektrische Signal synchron zur Emission von Lichtpulsen betrieben werden. Der Feedback-Detektor **4** ist so positioniert, dass dieser das durch die Regel-Lichtquelle **3** emittierte Licht erfasst.

Das elektrische Feedback-Signal wird wiederum mittels eines Transimpedanz-Verstärkers **5** verstärkt und an eine Regeleinheit **6** übergeben. Die Regeleinheit **6** wird durch eine elektrische Schaltung gebildet, welche das Sollsignal **7** mit dem Feedback-Signal vom Feedback-Detektor **4** vergleicht und den Strom sowohl durch die Emissions-Lichtquelle **2** als auch die Regel-Lichtquelle **3** quellen derart reguliert, dass die Differenz beider Signale Null ist.

Unmittelbar erfolgt durch die Regeleinheit **6** eine stete Nachregulation des elektrischen Signals anhand der vom Feedback-Detektor gemessenen Emission der Regel-Lichtquelle **3.** Aufgrund der Reihenschaltung ist das Emissionsverhalten der Regel-Lichtquelle **3** vorteilhafterweise identisch oder nahezu identisch zum Emissionsverhalten der Emissions-Lichtquelle **2,** sodass durch die Regelung ebenso das Ist-Signal der Emissions-Lichtquelle **2** an das Soll-Signal **7** erfolgt. Die räumliche Trennung von Emissions- und Regel-Lichtquelle führt zu einer erhöhten konstruktiven Flexibilität und einer Reihe von Vorteilen.

Abb. 3B zeigt analog zur Abb. 2B eine Anordnung von Emissions-Lichtquellen **2** zur Abdeckung verschiedener Intensitätsbereiche. Hierbei koppeln drei Emissions-Lichtquellen **2** anhand ihrer relativen Positionierung mit unterschiedlicher Effektivität in den Lichtleiter **2** ein. Die unterschiedliche Positionierung und mithin der Effizienzgrad der Einkopplung in den Lichtleiter **1,** erlaubt die Einstellung unterschiedlicher Intensitätsstufen. In der gezeigten Ausführungsform entspricht die obere Emissions-Lichtquelle **2** der höchsten Intensitätsstufe und die untere Emissions-Lichtquelle **2** der niedrigsten Intensitätsstufe. Vorteilhafterweise können die Regel-Lichtquellen **3** jedoch unabhängig hiervon optimal auf den Feedback-Detektor **4** ausgerichtet werden. Eine kompakte Positionierung der Regel-Lichtquellen **3** in Bezug auf den Feedback-Detektor **4** stellt eine optimale Ausleuchtung sicher und führt dazu, dass eine individuelle Anpassung der Feedback-Regulation für einzelne Paare von Emissions- und Regel-Lichtquellen entbehrlich ist.

Abbildung 4 zeigt eine schematische Illustration einer bevorzugten Ausführungsform der Vorrichtung zur Bereitstellung von Lichtpulsen mit unterschiedlicher spektraler Emission. Hierbei sind drei oder mehr Emissions-Lichtquellen **2** mit unterschiedlichem Emissionsspektrum auf einen Lichtleiter **1** ausgerichtet. Jede der drei (oder mehr) Emissions-Lichtquellen **2** sind drei (oder entsprechend mehr) Regel-Lichtquellen **3** zugeordnet, welche auf jeweils drei (oder mehr) Feedback-Detektoren **4** leuchten. Die Feedback-Regulation erfolgt mittels einer Regeleinheit **6** anhand des obig beschriebenen Prinzips zur Angleichung eines Sollsignal **7** an das Feedback-Signal der Feedback-Detektoren **4.** Die Bereitstellung getrennter Regel-Lichtquellen **3** erlaubt eine äußerst kompakte Anordnung der Emissions-Lichtquellen **2,** wie anhand der in Abb. 5 gezeigten bevorzugten Ausführungsform deutlich wird.

Abbildung 5 zeigt eine schematische Darstellung einer bevorzugten Platine auf welcher Emissions-Lichtquellen **2** kreisförmig angeordnet sind (A: Draufsicht; B: Seitenansicht). Dies erlaubt eine enge Integration der Emissions-Lichtquellen **2** auf einer Platine. Wie gezeigt, ist es möglich, sechs Emissions-Lichtquellen **2** (beispielsweise LEDs) auf einem Ring bzw. Kreis zu positionieren, dessen Durchmesser weniger als 2 mm beträgt. Für LEDs mit typischen Abmaßen von 0.5 mm, können diese auf einem derartigen Ring besonders eng mit Abständen von weniger als 0,1 mm angeordnet werden. Durch Ausrichtung des Zentrum des Ringes auf den Lichtleiter **1** weisen die Emissions-Lichtquellen **2** einen gleichen Abstand und Orientierung zum Lichtleiter **1** auf und koppeln mit gleicher Effizienz in selbigen ein. In der Mitte der Platine **8** kann es bevorzugt sein eine Apertur **9** anzuordnen, so dass mehrere Emissionsgruppen hintereinander angeordnet werden können (vgl. Abb. 5). Ebenso kann es in anderen Ausführungsformen (nicht gezeigt) bevorzugt sein in der Mitte des Kreises eine Emissions-Lichtquelle **2** einzusetzen, um bewusst Helligkeitsunterschiede verschiedener Emissions-Lichtquellen **2** (beispielsweise LEDs) auszugleichen.

Abbildung 6 illustriert schematisch eine Anordnung von mehreren Emissionsgruppen mit mehrfarbigen Lichtquellen, welche unterschiedliche Intensitätsstufen repräsentieren. Bei den Emissionsgruppen handelt es sich bevorzugt um eine wie in Abb. 5 gezeigte Gruppe mit mehreren Emissions-Lichtquellen **2** mit unterschiedlichem spektralem Emissionsbereich, welche ringförmig bzw. kreisförmig auf einer Platine bzw. Leiterplatte **8** angeordnet vorliegen. Durch die Positionierung der Emissionsgruppen hintereinander und Ausnutzung der teilweisen Abschirmung davorliegender Leiterplatten **8** können die jeweiligen Emissionsgruppen für unterschiedliche Intensitätsstufen genutzt werden.

Um die Effizienz der Einkopplung für die unterschiedliche Emissionsgruppen zu variieren, weisen sowohl die erste als auch zweite Leiterplatte eine Apertur **9** auf. Eine optische Faser **1** leitet das Licht von der eingangsseitigen (linken) Emissionsgruppe der ersten Leiterplatte **8** zur ausgangsseitigen (rechten) Emissionsgruppe der zweiten Leiterplatte **8.** Die Effizienz der Einkopplung der ersten Emissionsgruppe kann durch die Größe der Apertur **9** in der zweiten Leiterplatte **8,** als auch durch den Faserabstand A zum auskoppelnden Lichtleiter **1** eingestellt werden.

Es wird darauf hingewiesen, dass verschiedene Alternativen zu den beschriebenen Ausführungsformen der Erfindung verwendet werden können, um die Erfindung auszuführen und zu der erfindungsgemäßen Lösung zu gelangen. Die erfindungsgemäße Vorrichtung, das System oder Kit sowie deren Verwendung beschränken sich in ihren Ausführungen somit nicht auf die vorstehenden bevorzugten Ausführungsformen. Vielmehr ist eine Vielzahl von Ausgestaltungsvarianten denkbar, welche von der dargestellten Lösung abweichen können. Ziel der Ansprüche ist es, den Schutzumfang der Erfindung zu definieren. Der Schutzumfang der Ansprüche ist darauf gerichtet, die erfindungsgemäße Vorrichtung, das System bzw. Kit und deren Verwendungen abzudecken.

### BEZUGSZEICHENLISTE

- 1: Lichtleiter (Faser)
- 2: Emissions-Lichtquelle, insbesondere Emissions-LED
- 3: Regel-Lichtquelle, insbesondere Regel-LED
- 4: Feedback-Detektor, insbesondere Feedback-Photodiode
- 5: Transimpedanz-Verstärker
- 6: Regeleinheit, insbesondere Regler bzw. Controller
- 7: Durch Funktionsgenerator vorgegebene Signalform als Soll-Signal (Set-Signal)
- 8: Platine (Leiterplatte)
- 9: Apertur

## Patentansprüche

1. Vorrichtung zur Erzeugung von Lichtpulsen zur Charakterisierung, Standardisierung und/oder Kalibrierung von Photodetektoren innerhalb eines Durchflusszytometers oder Mikroskops umfassend
a) eine Steuereinheit
b) mindestens eine Emissions-Lichtquelle und
c) einen Lichtleiter,
wobei die Steuereinheit konfiguriert ist zur Erzeugung eines elektrischen Signales mit einer vorgegebenen Signalform mittels derer die mindestens eine Emissions-Lichtquelle zur Erzeugung von Lichtpulsen gesteuert wird und die mindestens eine Emissions-Lichtquelle für eine Kopplung der Lichtpulse in den Lichtleiter positioniert vorliegt, **dadurch gekennzeichnet, dass**
die Vorrichtung mindestens einen Feedback-Detektor und eine Regel-Lichtquelle umfasst, wobei die Regel-Lichtquelle mit der mindestens einen Emissions-Lichtquelle in Reihenschaltung vorliegt, sodass die Regel-Lichtquelle mittels desselben elektrischen Signales zur Erzeugung von Lichtpulsen gesteuert wird und wobei die Regel-Lichtquelle derart positioniert vorliegt, dass die von der Regel-Lichtquelle tatsächlich erzeugten Lichtpulse nicht in den Lichtleiter eingekoppelt, sondern vom Feedback-Detektor erfasst und an eine Regeleinheit übertragen werden, welche für eine Nachregelung des elektrischen Signales konfiguriert ist, wobei der Feedback-Detektor die Lichtpulse der Emissionslichtquelle nicht unmittelbar detektiert.

2. Vorrichtung nach dem vorherigen Anspruch
**dadurch gekennzeichnet, dass**
es sich bei der mindestens einen Emissions-Lichtquelle und der mindestens einen Regel-Lichtquelle um Leuchtdioden (LEDs) handelt und/oder der Feedback-Detektor eine Photodiode ist.

3. Vorrichtung nach einem der vorherigen Ansprüche
**dadurch gekennzeichnet, dass**
die Steuereinheit eine Datenverarbeitungseinheit, bevorzugt einen Mikroprozessor, und einen Funktionsgenerator, bevorzugt einen Arbiträr-Funktionsgenerator, umfasst.

4. Vorrichtung nach einem der vorherigen Ansprüche
**dadurch gekennzeichnet, dass**
die Steuereinheit Eingabemittel zur Festlegung von Parametern der zu erzeugende Lichtpulse umfasst und die Datenverarbeitungseinheit konfiguriert ist auf Basis der vorgegebenen Parameter den Funktionsgenerator zur Erzeugung des elektrischen Signals zu steuern.

5. Vorrichtung nach einem der vorherigen Ansprüche
**dadurch gekennzeichnet,**
die vorgegebenen Signalform elektrische Pulse mit einer Pulsbreite von 0,1 µs bis 100 µs, bevorzugt von 1 µs bis 10 µs und einer Wiederholungsrate von 0,1 bis 100 kHz, bevorzugt 0,5 kHz bis 40 kHz umfasst.

6. Vorrichtung nach einem der vorherigen Ansprüche
**dadurch gekennzeichnet,**
die vorgegebenen Signalform elektrische Pulse mit einer Gaußform oder einer flat-top-Pulsform umfasst.

7. Vorrichtung nach einem der vorherigen Ansprüche
**dadurch gekennzeichnet,**
die Regeleinheit für eine Nachregelung des elektrischen Signals mit einer Frequenz von mehr als 10 MHz, bevorzugt mehr als 50 MHz, 100 MHz konfiguriert ist.

8. Vorrichtung nach einem der vorherigen Ansprüche
**dadurch gekennzeichnet,**
die Vorrichtung für jede der mindestens einen Emissions-Lichtquelle eine Regel-Lichtquelle mit im Wesentlichen identischen Leistungsparametern, bevorzugt in Bezug auf das Emissionsspektrum, die Beleuchtungsstärke und/oder die Licht-Strom-Charakteristik, aufweist.

9. Vorrichtung nach einem der vorherigen Ansprüche
**dadurch gekennzeichnet,**
die Vorrichtung zwei oder mehr Emissions-Lichtquellen aufweist, wobei die Vorrichtung derart konfiguriert ist, , dass die zwei oder mehr Emissions-Lichtquellen mit einer unterschiedlichen Effizienz in den Lichtleiter einkoppeln, sodass in Abhängigkeit der Ansteuerung der zwei oder mehr Emissions-Lichtquellen unterschiedliche Intensitätsbereiche für die ausgekoppelten Lichtpulse wählbar sind.

10. Vorrichtung nach einem der vorherigen Ansprüche
**dadurch gekennzeichnet,**
die Vorrichtung zwei oder mehr, bevorzugt drei, vier, fünf, sechs oder mehr, EmissionsLichtquellen sowie zugeordnete zwei oder mehr, bevorzugt drei, vier, fünf, sechs oder mehr, Regel-Lichtquellen mit unterschiedlichen spektralen Emissionsbereichen umfasst, wobei bevorzugt die zwei oder mehr, bevorzugt drei, vier, fünf, sechs oder mehr, Emissions-Lichtquellen einen spektralen Bereich einer Breite von mindestens 400 nm, bevorzugt 500 nm, 600 nm oder mehr abdecken, wobei der spektrale Bereich besonders bevorzugt innerhalb eines Intervalls von 200 nm bis 1500 nm, bevorzugt 300 nm bis 1200 nm, 400 nm bis 900 nm, liegt.

11. Vorrichtung nach einem der vorherigen Ansprüche 13 oder 14
**dadurch gekennzeichnet,**
die zwei oder mehr, bevorzugt drei, vier, fünf, sechs oder mehr, Emissions-Lichtquellen auf einer Platine installiert vorliegen, wobei die zwei oder mehr, bevorzugt drei, vier, fünf, sechs oder mehr, Emissions-Lichtquellen bevorzugt kreisförmig auf der Platine angeordnet sind.

12. Vorrichtung nach einem der vorherigen Ansprüche
**dadurch gekennzeichnet, dass**
die Vorrichtung zwei oder mehr Emissionsgruppen von zwei oder mehr, bevorzugt drei, vier, fünf, sechs oder mehr, Emissions-Lichtquellen mit unterschiedlichen spektralem Emissionsbereich aufweist, wobei die zwei oder mehr Emissionsgruppen derart positioniert vorliegen, dass diese mit unterschiedlicher Effizienz in die Lichtfaser einkoppeln,
wobei die zwei oder mehr Emissionsgruppen bevorzugt auf Platinen angeordnet vorliegen, welche entlang der Emissionsrichtung hintereinander positioniert sind und jeweils eine Apertur für einen Lichtdurchlass in Emissionsrichtung einer dahinterliegenden Emissionsgruppe aufweisen, sodass die Einkopplung einer vorderen Emissionsgruppe durch die teilweise Abschirmung einer dahinterliegenden Platine vermindert wird.

13. Verwendung einer Vorrichtung gemäß einem der vorherigen Ansprüche zur Charakterisierung, Standardisierung und/oder Kalibrierung von Photodetektoren innerhalb eines Durchflusszytometers oder Mikroskops.

14. Verwendung gemäß dem vorherigen Anspruch für eine Kalibrierung der Intensitätsskalen der Photodetektoren zur Ermittlung absoluter Einheiten, einer Charakterisierung der Photodetektoren, beispielsweise im Hinblick auf deren Dunkelrauschen, *signal-to-noise ratio* (SNR) oder *dynamic range* (DNR) und/oder zur Optimierung der Betriebsparameter der Photoetektoren, beispielsweise der Spannungs- bzw. Verstärkereinstellung im Falle eines Photomultipliers (PMT)

15. Kit umfassend
a. eine Vorrichtung gemäß einem der vorherigen Ansprüche
b. ein Computerprogramm konfiguriert für die Durchführung eines Verfahrens zur Charakterisierung, Standardisierung und/oder Kalibrierung eines Durchflusszytometers oder Mikroskops mittels der Vorrichtung
c. Optional Instruktionen und/oder Mittel zum Anschluss der Vorrichtung an ein Durchflusszytometer oder Mikroskop.

## Claims

1. Device for generating light pulses for characterization, standardization and/or calibration of photodetectors within a flow cytometer or microscope comprising
a) a control unit
b) at least one emission light source and
c) a light guide,
wherein the control unit is configured to generate an electrical signal having a predetermined waveform by means of which the at least one emission light source is controlled to generate light pulses, and the at least one emission light source is positioned for coupling the light pulses into the light guide
**characterized in that**
the device comprises at least one feedback detector and a control light source, wherein the control light source is present in series connection with the at least one emission light source, so that the control light source is controlled by means of the same electrical signal for generating light pulses and wherein the control light source is present positioned in such a way that the light pulses actually generated by the control light source are not coupled into the light guide, but are detected by the feedback detector and transmitted to a regulating unit which is configured for a readjustment of the electrical signal, wherein the feedback detector does not directly detect the light pulses of the emission light source.

2. Device according to the previous claim
**characterized in that**
the at least one emission light source and the at least one control light source are light emitting diodes (LEDs) and/or the feedback detector is a photodiode.

3. Device according to any one of the preceding claims
**characterized in that**
the control unit comprises a data processing unit, preferably a microprocessor, and a function generator, preferably an arbitrary function generator.

4. Device according to any one of the preceding claims
**characterized in that**
the control unit comprises input means for determining parameters of the light pulses to be generated and the data processing unit is configured to control the function generator for generating the electrical signal on the basis of the predetermined parameters.

5. Device according to any of the preceding claims
**characterized in that**
the predetermined waveform comprises electrical pulses having a pulse width from 0.1 µs to 100 µs, preferably from 1 µs to 10 µs, and a repetition rate from 0.1 to 100 kHz, preferably from 0.5 kHz to 40 kHz.

6. Device according to any one of the preceding claims
**characterized in that**
the predetermined waveform comprises electrical pulses having a Gaussian shape or a flat-top pulse shape.

7. Device according to any one of the preceding claims
**characterized in that**
the regulating unit is configured for readjustment of the electrical signal with a frequency of more than 10 MHz, preferably more than 50 MHz, 100 MHz.

8. Device according to one of the previous claims
**characterized in that**
the device comprises, for each of the at least one emission light source, a control light source having substantially identical performance parameters, preferably in terms of emission spectrum, illuminance and/or light-current characteristics.

9. Device according to any one of the preceding claims
**characterized in that**
the device comprises two or more emission light sources, the device being configured in such a way that the two or more emission light sources couple into the light guide with a different efficiency, so that, depending on a selective control of the two or more emission light sources, different intensity ranges for the coupled-out light pulses can be selected.

10. Device according to any of the preceding claims
**characterized in that**
the device comprises two or more, preferably three, four, five, six or more, emission light sources and associated two or more, preferably three, four, five, six or more, control light sources having different spectral emission ranges, wherein preferably the two or more, preferably three, four, five, six or more, emission light sources cover a spectral range of a width of at least 400 nm, preferably 500 nm, 600 nm or more, wherein the spectral range more preferably is comprised within an interval of 200 nm to 1500 nm, preferably 300 nm to 1200 nm, 400 nm to 900 nm.

11. Device according to any one of the preceding claims 13 or 14
**characterized in that**
the two or more, preferably three, four, five, six or more, emission light sources are present installed on a circuit board, wherein the two or more, preferably three, four, five, six or more, emission light sources are preferably arranged circularly on said circuit board.

12. Device according to any of the previous claims
**characterized in that**
the device comprises two or more emission groups of two or more, preferably three, four, five, six or more, emission light sources with different spectral emission ranges, wherein the two or more emission groups are positioned such that they couple into the light guide with a different efficiency,
wherein the two or more emission groups are preferably arranged on circuit boards which are positioned consecutively along the emission direction and which each exhibit an aperture for a light passage in the emission direction of an emission group situated upstream, so that the coupling of a front emission group is reduced by the partial shielding of a downstream circuit board situated behind the front emission group.

13. Use of a device according to any one of the preceding claims for characterization, standardization and/or calibration of photodetectors within a flow cytometer or microscope.

14. Use according to the previous claim for a calibration of the intensity scales of the photodetectors for the determination of absolute units, a characterization of the photodetectors, for example with regard to their dark noise, signal-to-noise ratio (SNR) or dynamic range (DNR) and/or for the optimization of the operating parameters of the photodetectors, for example the voltage or amplifier setting in case of a photomultiplier (PMT).

15. Kit comprising
a. A device according to any one of the preceding claims
b. A computer program configured to perform a method of characterization, standardization and/or calibration of a flow cytometer or microscope using the device
c. Optionally, instructions and/or means for connecting the device to a flow cytometer or microscope.

## Revendications

1. Dispositif de génération d'impulsions lumineuses destiné à la caractérisation, la normalisation et/ou l'étalonnage de photodétecteurs au sein d'un cytomètre à flux ou d'un microscope comprenant
a) une unité de commande
b) au moins une source lumineuse d'émission et
c) un guide de lumière,
dans lequel l'unité de commande est configurée pour générer un signal électrique avec une forme de signal prédéterminée au moyen duquel l'au moins une source lumineuse d'émission est commandée pour générer des impulsions lumineuses et l'au moins une source lumineuse d'émission est positionnée pour coupler les impulsions lumineuses dans le guide de lumière,
**caractérisé en ce que**
le dispositif comprend au moins un détecteur de rétroaction et une source lumineuse de commande, dans lequel la source lumineuse de commande est connectée en série avec l'au moins une source lumineuse d'émission, de sorte que la source lumineuse de commande soit commandée au moyen du même signal électrique pour générer des impulsions lumineuses et dans lequel la source lumineuse de commande est positionnée de telle sorte que les impulsions lumineuses réellement générées par la source lumineuse de commande ne sont pas couplées au guide de lumière, mais sont détectées par le détecteur de rétroaction et transmises à une unité de commande qui est configurée pour réajuster le signal électrique, dans lequel le détecteur de rétroaction ne détecte pas directement les impulsions lumineuses de la source lumineuse d'émission.

2. Dispositif selon la revendication précédente
**caractérisé en ce que**
l'au moins une source lumineuse d'émission et l'au moins une source lumineuse de commande sont des diodes électroluminescentes (DEL) et/ou le détecteur de rétroaction est une photodiode.

3. Dispositif selon l'une des revendications précédentes
**caractérisé en ce que**
l'unité de commande comprend une unité de traitement de données, de préférence un microprocesseur, et un générateur de fonctions, de préférence un générateur de fonctions arbitraires.

4. Dispositif selon l'une des revendications précédentes
**caractérisé en ce que**
l'unité de commande comprend des moyens d'entrée pour déterminer les paramètres des impulsions lumineuses à générer et l'unité de traitement de données est configurée pour commander le générateur de fonctions pour générer le signal électrique sur la base des paramètres prédéterminés.

5. Dispositif selon l'une des revendications précédentes
**caractérisé en ce que**
la forme de signal prédéterminée comprend des impulsions électriques avec une largeur d'impulsion de 0,1 µs à 100 µs, de préférence de 1 µs à 10 µs et une fréquence de répétition de 0,1 à 100 kHz, de préférence de 0,5 kHz à 40 kHz.

6. Dispositif selon l'une des revendications précédentes
**caractérisé en ce que**
la forme de signal prédéterminée comprend des impulsions électriques ayant une forme gaussienne ou une forme d'impulsion à sommet plat.

7. Dispositif selon l'une des revendications précédentes
**caractérisé en ce que**
l'unité de commande est configurée pour réajuster le signal électrique avec une fréquence supérieure à 10 MHz, de préférence supérieure à 50 MHz, 100 MHz.

8. Dispositif selon l'une des revendications précédentes
**caractérisé en ce que**
le dispositif comporte une source lumineuse de commande avec des paramètres de performance essentiellement identiques pour chacune de l'au moins une source lumineuse d'émission, de préférence en ce qui concerne le spectre d'émission, l'intensité de l'éclairage et/ou la caractéristique du flux lumineux.

9. Dispositif selon l'une des revendications précédentes
**caractérisé en ce que**
le dispositif comporte deux sources lumineuses d'émission ou plus, dans lequel le dispositif est configuré de telle manière que les deux sources lumineuses d'émission ou plus se couplent dans le guide de lumière avec des efficacités différentes, de sorte que, en fonction de la commande des deux sources lumineuses d'émission ou plus, il est possible de sélectionner différentes plages d'intensité pour les impulsions lumineuses découplées.

10. Dispositif selon l'une des revendications précédentes
**caractérisé en ce que**
le dispositif comprend deux sources lumineuses d'émission ou plus, de préférence trois, quatre, cinq, six ou plus, et deux sources lumineuses de commande associées ou plus, de préférence trois, quatre, cinq, six ou plus, avec des plages spectrales d'émission différentes, dans lequel de préférence les deux ou plus, de préférence trois, quatre, cinq, six ou plus, sources lumineuses d'émission couvrent une plage spectrale d'une largeur d'au moins 400 nm, de préférence 500 nm, 600 nm ou plus, dans lequel la plage spectrale est notamment de préférence comprise dans un intervalle de 200 nm à 1500 nm, de préférence de 300 nm à 1200 nm, de 400 nm à 900 nm.

11. Dispositif selon la revendication 13 ou 14
**caractérisé en ce que**
les deux sources lumineuses d'émission ou plus, de préférence trois, quatre, cinq, six ou plus, sont installées sur une carte de circuit imprimé, dans lequel les deux sources lumineuses d'émission ou plus, de préférence trois, quatre, cinq, six ou plus, sont de préférence disposées de manière circulaire sur le circuit imprimé.

12. Dispositif selon l'une des revendications précédentes
**caractérisé en ce que**
le dispositif comporte deux groupes d'émission ou plus de deux ou plus, de préférence trois, quatre, cinq, six ou plus, sources lumineuses d'émission avec des plages d'émission spectrales différentes, dans lequel les deux groupes d'émission ou plus sont positionnés de telle manière qu'ils se couplent avec une efficacité différente dans la fibre optique, dans lequel les deux groupes d'émission ou plus sont de préférence disposés sur des cartes de circuits imprimés lesquelles sont positionnées l'une derrière l'autre le long de la direction d'émission et comportent chacune une ouverture pour un passage de lumière dans la direction d'émission d'un groupe d'émission derrière lui, de sorte que le couplage d'un groupe d'émission avant est réduit par le blindage partiel d'un circuit imprimé situé derrière lui.

13. Utilisation d'un dispositif selon l'une des revendications précédentes destiné à la caractérisation, la normalisation et/ou l'étalonnage de photodétecteurs au sein d'un cytomètre à flux ou d'un microscope.

14. Utilisation selon la revendication précédente pour un étalonnage des échelles d'intensité des photodétecteurs pour déterminer des unités absolues, une caractérisation des photodétecteurs, par exemple en ce qui concerne leur bruit d'obscurité, leur rapport *signal sur bruit* (SNR) ou *leur plage dynamique* (DNR) et/ou pour l'optimisation des paramètres de fonctionnement des photodétecteurs, par exemple le réglage de la tension ou de l'amplificateur dans le cas d'un photomultiplicateur (PMT).

15. Kit comprenant
a. un dispositif selon l'une des revendications précédentes,
b. un programme informatique configuré pour mettre en œuvre un procédé de caractérisation, de normalisation et/ou d'étalonnage d'un cytomètre à flux ou d'un microscope à l'aide du dispositif
c. Éventuellement des instructions et/ou des moyens pour connecter le dispositif à un cytomètre à flux ou un microscope.
